# FASCICULE DE BREVET EUROPEEN

(11) **EP 3 958 785 B1**
(45) Date de publication et mention de la délivrance du brevet: **27.09.2023**
(21) Numéro de dépôt: 20720455.3
(22) Date de dépôt: 24.04.2020
(51) Int. Cl.: A61C 7/00

(54) **PROGRAMME D'ORDINATEUR D'EVALUATION D'UNE GOUTTIERE ORTHODONTIQUE**
COMPUTERPROGRAM ZUR BEWERTUNG EINES ORTHODONTISCHEN ALIGNERS
COMPUTER PROGRAM FOR EVALUATING AN ORTHODONTIC ALIGNER

(30) Priorité: 24.04.2019 FR 1904306
(43) Date de publication de la demande: 02.03.2022
(73) Titulaire: Dental Monitoring, 75017 Paris (FR)
(72) Inventeur: SALAH, Philippe, 75017 Paris (FR); PELLISSARD, Thomas, 92110 Clichy (FR); GHYSELINCK, Guillaume, 59169 Cantin (FR); DEBRAUX, Laurent, 75020 Paris (FR)
(74) Mandataire: Cabinet Nony
(86) Numéro de dépôt international: PCT/EP2020/061499
(87) Numéro de publication internationale: WO 2020/216925

(56) Documents cités:
- EP-A1- 3 412 245
- EP-A1- 3 432 267
- EP-A2- 1 570 803
- KR-B1- 101 930 062
- US-A1- 2007 128 573
- US-A1- 2014 204 118
- US-A1- 2019 102 880

## Description

### Domaine technique

La présente invention concerne un procédé d'évaluation de la conformité d'une gouttière orthodontique, ou « aligneur », portée par un patient, en particulier pour évaluer la conformité de la forme de la gouttière orthodontique au positionnement des dents dudit patient. L'invention concerne aussi un procédé d'adaptation d'un traitement au moyen de gouttières orthodontiques.

L'invention concerne enfin un programme informatique pour la mise en oeuvre de ces procédés.

### Etat de la technique

Classiquement, au début d'un traitement orthodontique, l'orthodontiste détermine le positionnement des dents qu'il souhaite obtenir à un instant du traitement, dit "set-up ". Le set-up peut être défini au moyen d'une empreinte ou à partir d'un scan tridimensionnel des dents du patient. L'orthodontiste fabrique alors, en conséquence, un appareil orthodontique adapté à ce traitement.

L'appareil orthodontique peut être une gouttière orthodontique (« *aligner »* en anglais). Une gouttière se présente classiquement sous la forme d'un appareil monobloc amovible, classiquement en un matériau polymère transparent, qui comporte une goulotte conformée pour que plusieurs dents d'une arcade, généralement toutes les dents d'une arcade, puissent y être logées.

La forme de la goulotte est adaptée pour maintenir en position la gouttière sur les dents, tout en exerçant une action de correction du positionnement de certaines dents.

On détermine classiquement, au début du traitement, les formes que doivent prendre les différentes gouttières à différents moments du traitement, puis on fait fabriquer l'ensemble des gouttières correspondantes. A des instants prédéterminés, le patient change de gouttière.

Le traitement au moyen de gouttières est avantageusement peu contraignant pour le patient. En particulier, le nombre de rendez-vous chez l'orthodontiste est limité. En outre, la douleur est plus faible qu'avec un arc orthodontique métallique attaché aux dents.

A intervalles réguliers, le patient se déplace chez l'orthodontiste pour un contrôle visuel, notamment pour vérifier si le déplacement des dents est conforme aux attentes et si la gouttière qu'il porte est toujours adaptée au traitement.

Si l'orthodontiste diagnostique une inadaptation au traitement, et en particulier en décollement de la gouttière, il effectue une nouvelle empreinte des dents, ou, de manière équivalente, un nouveau scan des dents, puis commande une nouvelle série de gouttières configurées en conséquence.

La nécessité de devoir se déplacer chez l'orthodontiste est une contrainte pour le patient. La confiance du patient en son orthodontiste peut être également entamée. Enfin, il en résulte un coût supplémentaire. Le nombre de visites de contrôle chez l'orthodontiste doit donc être limité.

L'inadaptation d'une gouttière peut être également inesthétique.

Pour résoudre ces problèmes, le Demandeur a proposé, dans EP3412245, un procédé d'évaluation de la forme d'une gouttière orthodontique portée par un patient.

Ce procédé facilite considérablement l'évaluation de la bonne adéquation de la gouttière au traitement. En particulier, il peut être mis en oeuvre à partir de simples photographies ou films, pris sans précaution particulière, par exemple par le patient. Le nombre de rendez-vous chez l'orthodontiste peut donc être limité.

Le procédé décrit dans EP3412245 repose sur une comparaison de contours des dents et de la gouttière sur des photos. Il peut cependant fournir des informations erronées lorsque ces contours sont difficiles à distinguer sur les photos.

EP 1 570 803 A2 et US 2007/128573 A1 divulguent des programmes d'ordinateur utilisés dans l'orthodontie.

Il existe un besoin pour une solution répondant à ce problème.

Un but de l'invention est de répondre, au moins partiellement, à ce besoin.

### Exposé de l'invention

### Résumé de l'invention

L'invention fournit programme d'ordinateur comprenant des instructions de code de programme pour la mise en oeuvre, lorsque le programme est exécuté par ordinateur, d'un procédé d'évaluation, par ordinateur, à un instant « actualisé », de la conformité d'une gouttière orthodontique à une arcade dentaire d'un patient, dite « arcade de support », ledit procédé comportant les étapes successives suivantes :
A) réalisation d'un modèle tridimensionnel numérique de l'arcade de support, dans sa configuration à l'instant actualisé, ou « modèle de référence actualisé », et détermination, dans le modèle de référence actualisé, d'une surface de support de la gouttière ;
B) déformation, en fonction de la géométrie de la gouttière, de la surface de support pour obtenir une surface de support déformée ;
C) comparaison d'une surface extérieure de la gouttière avec ladite surface de support déformée, puis détermination, en fonction de ladite comparaison, d'au moins un score de conformité de la gouttière à l'arcade de support.

Comme on le verra plus en détail dans la suite de la description, l'invention ne cherche pas à comparer la surface de support avec la surface intérieure de la gouttière sur laquelle les dents du patient devraient prendre appui dans la position de service. De manière remarquable, on détermine une surface de support déformée à partir de la surface de support et de la géométrie de gouttière, puis on compare cette surface de support déformée à la surface extérieure de la gouttière. Un programme d'ordinateur selon l'invention utilise ainsi la surface extérieure de la gouttière pour évaluer le décollement éventuel de la surface intérieure de la gouttière avec les dents. Avantageusement, la surface extérieure de la gouttière est facilement identifiable sur des représentations de la gouttière.

La fiabilité de la comparaison en est améliorée.

### Etape A)

Le modèle de référence actualisé peut être réalisé avec un scanner.

On appelle « modèle de dent actualisé » un modèle de dent dans le modèle de référence actualisé.

Dans un mode de réalisation particulièrement avantageux, à un instant initial préalable à l'étape A), on crée un modèle de référence initial et on découpe le modèle de référence initial de manière à définir, pour chaque dent représentée dans le modèle de référence initial, un modèle de référence tridimensionnel numérique de ladite dent, ou « modèle de dent initial». Ensuite, à l'instant actualisé, on déplace les modèles de dent initiaux pour réaliser le modèle de référence actualisé. Le déplacement est de préférence optimisé pour obtenir un modèle de référence actualisé compatible avec au moins une image actualisée de l'arcade de support acquise moins d'un mois, une semaine, un jour ou 1 heure avant l'instant actualisé.

Les modèles de dents actualisés sont alors des modèles de dent initiaux, éventuellement déplacés.

L'instant initial peut être en particulier au début du traitement orthodontique incluant l'utilisation de la gouttière orthodontique. Dans un mode de réalisation, l'intervalle temporel entre l'instant initial et le début du traitement orthodontique du patient est inférieur à 1 mois ou à une semaine.

L'instant actualisé est pendant un traitement orthodontique avec des gouttières. L'intervalle temporel entre l'instant actualisé et l'instant initial peut être ainsi supérieur à 1 semaine, 1 mois ou 3 mois.

De préférence, le modèle de référence initial est réalisé avec un scanner, avec une précision élevée.

L'image actualisée, de préférence une photo, peut être acquise avec un téléphone mobile, par exemple par le patient lui-même. Le déplacement des modèles de dent initiaux permet avantageusement d'aboutir à un modèle de référence actualisé également très précis, correspondant à la configuration des dents à l'instant actualisé, mais à partir de la ou des seules images actualisées, et donc sans avoir à réaliser un nouveau scan. Le procédé peut être ainsi mis en oeuvre sans avoir à prendre un rendez-vous chez l'orthodontiste.

### Etape B)

De préférence, ladite déformation est, en un point de la surface de support, de préférence au moins en tout point de la partie de la surface de support qui définit les extrémités libres des modèles de dent, de préférence en tout point de la surface de support, déterminée en fonction de la distance entre les surfaces intérieure et extérieure de la gouttière en un point de la surface intérieure de la gouttière destiné à être, dans la position de service, en contact avec ledit point de la surface de support. De préférence, ladite déformation est proportionnelle, de préférence d'une amplitude sensiblement égale à ladite distance.

De préférence, la déformation locale de la surface de support est déterminée en fonction de l'épaisseur locale de la gouttière. L'épaisseur locale de la gouttière est connue du fabricant puisque la fabrication de la gouttière nécessite d'en connaitre les caractéristiques dimensionnelles. Bien que ce mode de réalisation ne soit pas préféré, l'épaisseur locale peut être également mesurée ou être déterminée approximativement, par exemple en calculant l'épaisseur locale moyenne pour un ensemble de gouttières comparables.

Dans un mode de réalisation, la déformation est d'amplitude constante, en tout point de la surface de support.

De préférence, à l'étape B), on déforme la surface de support de manière que la surface de support déformée s'étende sensiblement suivant la surface extérieure de la représentation de la gouttière si cette gouttière était modélisée dans le modèle de référence actualisé dans sa position de service, en l'absence de décollement de la gouttière.

La déformation de la surface de support reproduit de préférence la transformation qui conduit à la surface extérieure de la gouttière à partir de la surface intérieure de la gouttière. En particulier, la déformation comprend de préférence un gonflement de la surface de support d'une amplitude sensiblement égale à ladite distance entre les surfaces intérieure et extérieure de la gouttière, de préférence sensiblement égale à cette distance, au moins dans la partie de la surface intérieure qui définit les extrémités libres des modèles de dent. Par exemple, si la gouttière est d'épaisseur « e » constante, la déformation est celle qui serait obtenue par un gonflement des dents pour les surépaissir d'une surépaisseur « e ».

Dans un mode de réalisation préféré, à l'étape A), on découpe le modèle de référence actualisé de manière à définir, pour chaque dent représentée dans le modèle de référence actualisé, un modèle de dent actualisée. La surface de support est alors définie par les surfaces des modèles de dent actualisés. A l'étape B), on déforme la surface de chaque modèle de dent actualisée pour obtenir un modèle de dent déformé, puis on fusionne les modèles de dent déformés et on définit la surface de support déformée comme étant au moins une partie, voire toute l'enveloppe de l'ensemble constitué des modèles de dent déformés fusionnés. La déformation de la surface d'un modèle de dent actualisée est de préférence un gonflement du modèle de dent actualisé, de préférence d'une amplitude constante, de préférence supérieure à 0,5 mm et/ou inférieure à 5 mm, à 4 mm ou à 2 mm, et/ou est, en un point de la surface d'un modèle de dent actualisé, déterminée en fonction de la distance entre les surfaces intérieure et extérieure de la gouttière en un point de la surface intérieure de la gouttière destiné à être, dans la position de service, en contact avec ledit point de la surface du modèle de dent actualisé. De préférence, l'amplitude de ladite déformation au dit point de la surface d'un modèle de dent actualisé est proportionnelle, de préférence sensiblement égale à ladite distance.

Dans un mode de réalisation préféré entre tous,
- à l'étape A), on prend une image de la gouttière à l'instant actualisé, dans une position de service dans laquelle elle est portée par ladite arcade de support, ou « image de gouttière »,
- on détermine un contour de la surface extérieure de la gouttière, ou « contour extérieur de gouttière », représenté sur l'image de gouttière,
- on recherche des conditions d'observation « cadrées » offrant une vue du modèle de référence actualisé compatible avec l'image de gouttière, c'est-à-dire présentant une concordance maximale avec les représentations des dents sur l'image de gouttière,
- à l'étape B), on déforme la surface de support, de préférence on fait gonfler les modèles de dent actualisés, de préférence d'une amplitude constante, et
- à l'étape C), on compare le contour extérieur de gouttière avec un contour de la surface de support déformée, ou « contour de support déformé », représenté sur une vue du modèle de référence actualisé déformé observé dans les conditions d'observation cadrées.

Le contour extérieur de gouttière présente l'avantage d'être généralement bien visible sur l'image de gouttière. Les inventeurs ont découvert que ce contour extérieur pouvait être très sensiblement différent du contour des extrémités libres des dents couvertes par la gouttière et le long desquelles il s'étend. En revanche, après simulation, sur le modèle de référence actualisé, d'un épaississement des dents, l'ensemble des modèles de dent gonflés définit une surface de support déformée qui est comparable avec la surface extérieure de gouttière, au moins à proximité des extrémités libres des dents.

En particulier, l'observation, dans des conditions identiques, de la surface de support déformée et de la surface extérieure de gouttière permet de définir un contour de support déformé et un contour de gouttière, respectivement, dont les différences permettent d'évaluer la conformité, c'est-à-dire de détecter un décollement (ou « unseat ») de la gouttière.

On peut par exemple déduire que, si le contour de support déformé est sensiblement identique au contour extérieur de la gouttière, la gouttière prend appui sur les dents dans la région de ces contours. La distance entre ces contours ou la variation de cette distance le long de ces contours peuvent au contraire indiquer un décollement anormal de la gouttière.

De préférence, on acquiert l'image de gouttière, de préférence une photo, avec un téléphone mobile. L'évaluation est ainsi possible à partir d'une simple image de gouttière, par exemple une photo prise par le patient, par exemple avec son téléphone portable. Le procédé peut être ainsi mis en oeuvre, de manière fiable, à partir de simples photographies ou films, pris sans précaution particulière, par exemple par le patient. Le nombre de rendez-vous chez l'orthodontiste peut donc être limité.

L'image de gouttière peut servir d'image actualisée pour déplacer les modèles de dent d'un modèle de référence initial afin de réaliser le modèle de référence actualisé.

### Etape C)

De préférence, à l'étape C), on positionne une représentation de ladite surface extérieure par rapport à la surface de support déformée de manière à superposer en registre au moins une région de ladite représentation avec ladite surface de support déformée, ladite région étant une région couvrant, dans la position de service, au moins une dent de l'arcade de support non décollée de la gouttière, puis on détermine le score de conformité en fonction de l'écartement entre la représentation de ladite surface extérieure ainsi positionnée et la surface de support déformée.

De préférence encore, un score de conformité élémentaire est déterminé pour chacune d'au moins une partie des dents représentées, au moins partiellement, par la surface de support, de préférence pour chacune desdites dents, et le score de conformité de la gouttière à l'arcade de support est déterminé en fonction du ou des dits scores de conformité élémentaires. Dans un mode de réalisation, le score de conformité de la gouttière à l'arcade de support est égal à un score de conformité élémentaire.

Dans un mode de réalisation, à l'étape C), on détermine le score de conformité au moyen d'un réseau de neurones. Le réseau de neurones peut être en particulier choisi dans la liste ci-dessous.

L'étape C) comporte de préférence les étapes suivantes :
i) détermination d'une distance entre le contour de support déformé et le contour extérieur de la gouttière ;
ii) détermination du score de conformité en fonction de la distance entre lesdits contours.

Lesdites distances peuvent être mesurées en pixels.

De préférence, le procédé comporte, à l'étape C), une opération de comparaison du score de conformité à un seuil d'acceptabilité et, de préférence, l'émission d'une information en fonction du résultat de la comparaison.

De préférence, avant de comparer le contour extérieur de gouttière et le contour de support déformé, on superpose en registre la représentation d'un élément sur l'image actualisée et la représentation dudit élément sur l'image de gouttière, l'élément étant un élément non modifié par le port de la gouttière, de préférence un contour de gencive.

Le procédé d'évaluation est mis en oeuvre par ordinateur, en particulier pour les étapes de modification d'un modèle, de calcul ou d'exploration d'un modèle, notamment pour rechercher une vue cadrée, ou d'analyse d'images ou de vues pour rechercher des contours.

Le procédé d'évaluation est mis en oeuvre « par ordinateur » car un ordinateur est mis en oeuvre pour réaliser ses étapes. L'invention concerne également :
- un programme d'ordinateur, et en particulier un applicatif spécialisé pour téléphone mobile, comprenant des instructions de code de programme pour l'exécution d'une ou plusieurs, de préférence toutes les étapes B) à C), et de préférence de l'étape A), lorsque ledit programme est exécuté par un ordinateur,
- un support informatique sur lequel est enregistré un tel programme, par exemple une mémoire ou un CD-ROM, et
- un appareil personnel, en particulier un téléphone mobile ou une tablette, dans lequel est chargé un tel programme.

L'invention concerne aussi un système comportant :
- un scanner tridimensionnel apte à réaliser un modèle de référence initial, ou un modèle de référence actualisé, et
- un appareil personnel, de préférence un téléphone mobile, chargé avec un programme comprenant des instructions de code de programme pour l'exécution d'une ou plusieurs, de préférence toutes les étapes B) à C), et/ou, à l'étape A), pour la génération d'un modèle de référence actualisé à partir d'un modèle de référence initial, lorsque ledit programme est exécuté par un ordinateur.

### Définitions

Par « dentition », on entend un ensemble de dents.

Par « patient », on entend toute personne pour laquelle un procédé selon l'invention est mis en oeuvre, que cette personne soit malade ou non.

Les « conditions d'acquisition » précisent la position et l'orientation dans l'espace d'un appareil d'acquisition d'images relativement aux dents du patient (conditions d'acquisition réelles) ou à un modèle tridimensionnel des dents du patient (conditions d'acquisition virtuelles), et de préférence la calibration de cet appareil d'acquisition d'images, et notamment les valeurs de l'ouverture de diaphragme, du temps d'exposition, de la distance focale et de la sensibilité. Des conditions d'acquisition sont dites "virtuelles", ou « théoriques », lorsqu'elles correspondent à une simulation dans laquelle l'appareil d'acquisition serait dans lesdites conditions d'acquisition (positionnement et de préférence calibration théoriques de l'appareil d'acquisition).

Les « conditions d'observation » précisent les conditions dans lesquelles un modèle est observé. Lorsque l'observation est effectuée, par un appareil d'acquisition pour acquérir une image, les conditions d'observation sont des « conditions d'acquisition ».

Par « modèle », on entend un modèle tridimensionnel numérique. Un modèle est constitué d'un ensemble de voxels. Un « modèle d'une arcade » est un modèle représentant au moins une partie d'une arcade dentaire, de préférence au moins 2, de préférence au moins 3, de préférence au moins 4 dents.

Une « surface de support » d'une gouttière est une surface qui modélise partiellement ou complètement la surface d'une arcade dentaire sur laquelle la gouttière prend appui dans la position de service. Elle peut être mais n'est pas nécessairement limitée à la surface sur laquelle la gouttière prend appui dans la position de service. Notamment, elle peut être constituée par la surface qui modélise les dents.

L'arcade « de support » est l'arcade dentaire qui supporte la gouttière, c'est-à-dire sur laquelle l'arcade dentaire est fixée.

La « déformation » de la surface de support est une opération de modification de la forme de cette surface. La surface après déformation ne peut donc plus être parfaitement superposée avec la surface avant déformation. Un simple déplacement de la surface de support dans l'espace n'est donc pas une déformation. Par exemple, un déplacement d'un modèle de dent, comme décrit par exemple dans EP 3 412 245, ne conduit pas à une déformation de la surface de ce modèle de dent.

Un scanner 3D est un appareil permettant d'obtenir un modèle d'un objet.

Une observation d'un modèle, dans des conditions d'observations déterminées, en particulier selon un angle et à une distance déterminés, est appelée une « vue ».

Par "image", on entend une image en deux dimensions, comme une photographie. Une image est formée de pixels.

Par « vue d'une arcade », « représentation d'une arcade », « scan d'une arcade », ou « modèle d'une arcade », on entend une vue, une représentation, un scan ou un modèle de tout ou partie de ladite arcade dentaire.

Un modèle numérique tridimensionnel d'un ensemble de dents d'un patient est « compatible » (ou « présente une concordance maximale ») avec une image lorsqu'il existe une vue de ce modèle qui correspond à ladite image, c'est-à-dire telle que les dents dudit modèle sont positionnées, relativement les unes aux autres, comme les dents réelles qu'elles modélisent. Ainsi, un modèle de référence actualisé est-il compatible avec une image actualisée si une vue du modèle de référence actualisé permet d'observer les contours des modèles de dents de manière qu'ils soient superposables en registre aux contours desdites dents sur ladite image actualisée.

De manière analogue, une vue d'un modèle peut être considérée comme « compatible », ou « superposable en registre », avec une image lorsqu'elle présente une concordance maximale avec l'image. L'obtention d'une concordance maximale peut en particulier résulter d'une opération d'optimisation ou de la mise en oeuvre d'un réseau de neurones.

La simulation d'un épaississement d'une dent est une opération par laquelle on simule l'ajout d'une couche de matière, ou « surépaisseur », à la surface extérieure de la dent. La « surface extérieure » de la dent est la surface de la dent exposée à l'environnement de la bouche, ce qui exclut les racines de la dent. L'épaississement d'une dent ne conduit donc pas à déplacer, vers l'extrémité libre de la dent, la limite entre la gencive et la dent.

La simulation d'un épaississement d'une dent réalisée sur un modèle de cette dent, produit un « gonflement » de ce modèle de dent.

La simulation d'un épaississement d'une pluralité de dents est une opération par laquelle on simule l'ajout d'une surépaisseur à la surface extérieure de chacune des dents, en ignorant les interactions physiques entre les dents adjacentes. La simulation d'un épaississement d'une pluralité de dents est réalisée au moyen d'un modèle de l'arcade, chaque modèle de dent du modèle de l'arcade étant gonflé de manière à traduire l'épaississement de la dent modélisée. Lorsque deux modèles de dent sont côte-à-côte, leur gonflement peut conduire à une interpénétration de ces modèles de dent.

Classiquement, la « géométrie » d'un objet est définie par l'ensemble de ses caractéristiques dimensionnelles. La géométrie d'un objet correspond donc à sa forme. Elle détermine notamment l'épaisseur locale de cet objet.

La « position de service » est la position dans laquelle la gouttière est portée par le patient.

« Comprendre », « comporter » ou « présenter » doivent être interprétés de manière large, non limitative, sauf indication contraire.

Les adjectifs « initial » et « actualisé » sont utilisés à des fins de clarté, et en particulier pour distinguer un instant dit « actualisé » et un instant dit « initial », ou les modèles de référence « actualisé » et initial, qui représentent l'arcade dentaire dans sa configuration aux instants actualisé et initial, respectivement.

### Brève description des figures

D'autres caractéristiques et avantages de l'invention apparaîtront encore à la lecture de la description détaillée qui va suivre et à l'examen du dessin annexé dans lequel :
- [Fig 1] représente une vue en perspective d'une gouttière orthodontique ;
- [Fig 2] représente une vue de dessus de la gouttière orthodontique de la figure 1 ;
- [Fig 3] représente un exemple de modèle de référence ;
- [Fig 4] représente un exemple de modèle de référence initial dont les modèles de dent ont été découpés (seuls les modèles de dent sont représentés) ;
- [Fig 5] représente schématiquement une arcade de support portant une gouttière orthodontique ;
- [Fig 6] représente une superposition en registre d'une image de gouttière, sous la forme d'une photo, et d'une vue cadrée d'un modèle de référence actualisé, les représentations des dents sur l'image de gouttière présentant une concordance maximale avec les représentations des dents sur cette vue ;
- [Fig 7] représente la superposition de la figure 6 après déformation des modèles de dent par gonflement ;
- [Fig 8] illustre schématiquement un procédé selon l'invention dans un mode de réalisation préféré ;
- [Fig 9] illustre schématiquement un procédé selon l'invention ;
- [Fig 10] illustre schématiquement l'acquisition d'une image de gouttière ;
- [Fig 11] illustre schématiquement un écarteur pouvant être utilisé avec le kit d'acquisition représenté sur la figure 10 ;
- [Fig 12] illustre un exemple de mise en oeuvre des étapes i) à iii) pour une étape C) ;
- [Fig 13] illustre un exemple de mise en oeuvre des étapes i') à iii') pour une étape C).

### Description détaillée

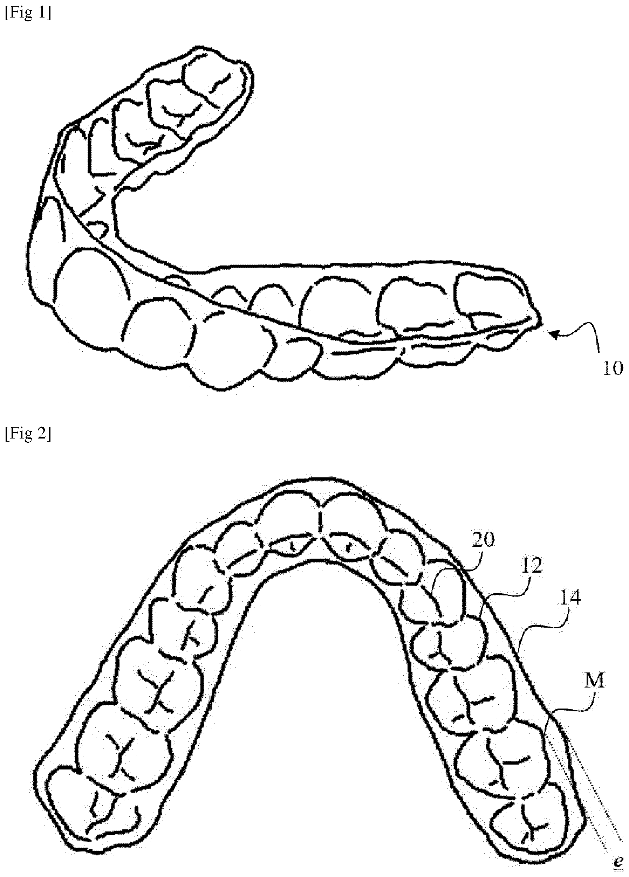

Comme représenté sur la figure 1, une gouttière 10 s'étend de manière à suivre les dents successives de l'arcade de support sur laquelle elle est fixée. Elle définit une goulotte de forme générale en « U ».

On appelle « goulotte » la surface intérieure 12 de la gouttière, orientée vers les dents dans la position de service. La forme de la goulotte est déterminée pour assurer la fixation de la gouttière sur les dents, mais également en fonction d'un positionnement cible souhaité pour les dents. Plus précisément, la forme est déterminée de manière que, lorsque la gouttière est dans sa position de service, elle exerce des contraintes tendant à déplacer les dents traitées vers leur positionnement cible.

Les dents qui portent la gouttière dans la position de service appartiennent à l'arcade de support 13 de la gouttière.

La surface extérieure 14 est la surface opposée à la surface intérieure 12. Elle est orientée vers les joues et les lèvres dans la position de service.

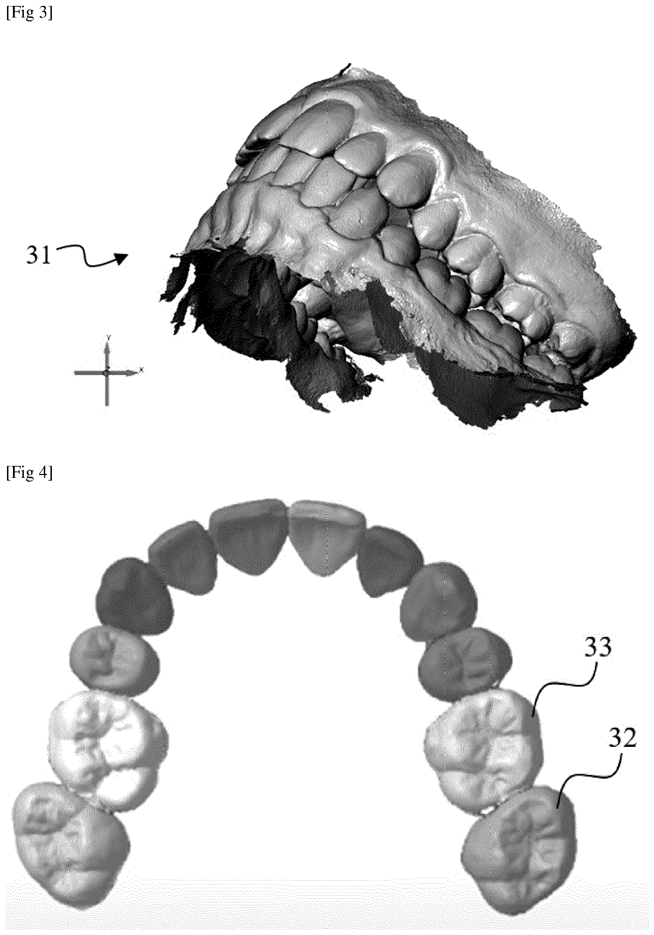

La matière de la gouttière séparant les surfaces extérieure 14 et intérieure 12 de la gouttière en un point M de la surface intérieure définit l'épaisseur « e » de la gouttière orthodontique. Cette épaisseur est visible sur la figure 3. La gouttière peut présenter une épaisseur variable ou sensiblement constante.

Dans la région des extrémités libres des dents, l'épaisseur est classiquement sensiblement constante. La surface extérieure 14 de la gouttière, qui s'étend parallèlement au fond 20 de la goulotte, apparaît donc généralement sensiblement de même forme que le fond de la goulotte.

Selon l'invention, on évalue la forme de la gouttière en comparant la surface extérieure de cette gouttière, dans sa position de service, avec une surface d'un modèle de l'arcade dentaire, ou « surface de support » 33, qui a été déformé en fonction de la géométrie de la gouttière, ou « surface de support déformée » 33.

Dans un mode de réalisation préférée, cette évaluation s'effectue par comparaison de représentations de ces surfaces sur des images. En particulier, on compare un contour extérieur de la gouttière représenté sur une image de gouttière, de préférence une photo, et un « contour de support déformé » défini par observation du modèle de référence déformé.

Le fond 20 de la goulotte présente une forme sensiblement complémentaire à celle des extrémités libres 22 des dents. En conséquence, sur une image représentant le fond de la goulotte, le contour du fond de la goulotte peut être comparé à un contour des dents pour évaluer un écartement entre le fond de la goulotte et une ou plusieurs extrémités libres de dents. Sur une image, notamment sur une photo, le contour du fond de la goulotte est cependant souvent difficile à distinguer, notamment parce que la gouttière n'est pas parfaitement transparente et qu'elle peut déformer le trajet de la lumière.

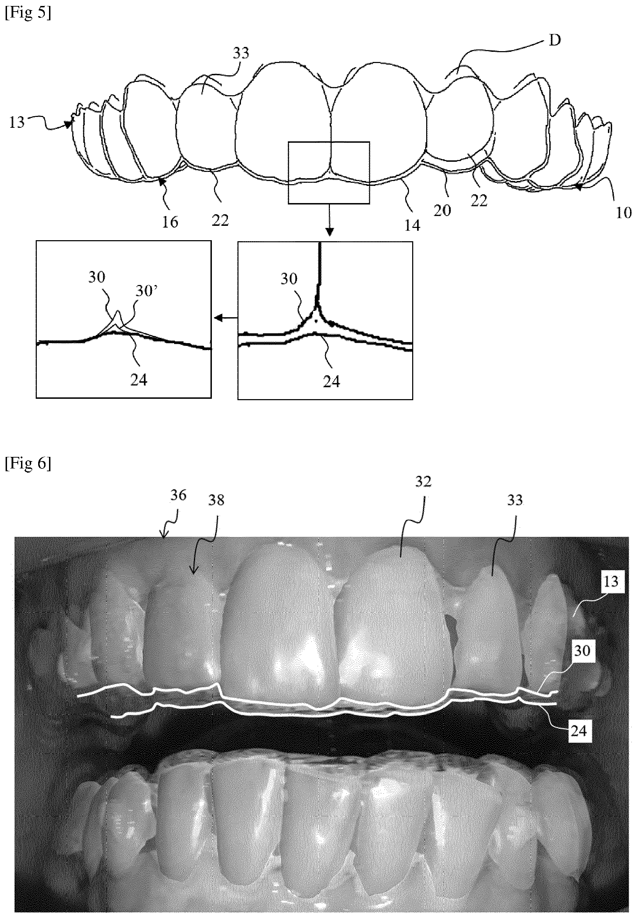

À la différence de la goulotte, la surface extérieure 14 de la gouttière présente l'avantage d'être bien visible sur les images, et en particulier sur les photos. Cependant, comme illustré sur la figure 5, la surface extérieure 14 n'est pas le résultat d'une simple homothétie du fond de la goulotte. La forme de surface extérieure 14 peut donc s'écarter sensiblement de celle d'une surface qui serait identique à celle de la goulotte, en particulier dans les régions entre les dents.

Sur une image, le contour de la surface extérieure 14 de la gouttière, ou « contour extérieur de gouttière » 24, ne définit donc pas précisément le contour du fond de la goulotte. Une comparaison entre le contour extérieur de gouttière 24 et le contour des extrémités libres des dents qui portent la gouttière, ou « contour de support » 30 (figure 5) ne permet donc pas de conclure de manière parfaitement fiable sur le décollement éventuel des dents du fond de la goulotte.

Le procédé de l'invention a pour objet de détecter, à partir du contour extérieur de gouttière, généralement bien visible, les situations dans lesquelles l'extrémité libre 22 d'une dent n'est plus en contact avec le fond de la goulotte, et de préférence, de mesurer l'ampleur de ce décollement.

Le procédé est mis en oeuvre lorsque le patient doit vérifier la conformité de la gouttière qu'il porte avec le traitement prévu, par exemple plus de 2 semaines ou plus de 4 semaines après le début du traitement avec la gouttière.

De préférence, au moins un rappel informant le patient de la nécessité de mettre en oeuvre le procédé est adressé au patient. Ce rappel peut être sous forme papier ou, de préférence, sous forme électronique, par exemple sous la forme d'un courriel, d'une alerte automatique d'un applicatif spécialisé mobile ou d'un SMS. Un tel rappel peut être envoyé par le cabinet ou le laboratoire d'orthodontie ou par le dentiste ou par un applicatif spécialisé sur le téléphone mobile du patient, par exemple.

Selon un mode de réalisation de l'invention, le contour extérieur de gouttière 24 n'est pas comparé au contour de support ou au contour du fond de la goulotte, mais à un contour de support déformé 30' (figure 5) déterminé à partir du contour de support 30, comme décrit en détail ci-dessous.

**A l'étape A),** on d'abord réalise un modèle de référence actualisé 31 (figure 3) pour modéliser l'arcade qui porte ou est destinée à porter la gouttière, à l'instant de l'évaluation, dit « instant actualisé ».

### Réalisation du modèle de référence actualisé

Le modèle de référence actualisé peut être réalisé par tout moyen. Le modèle de référence actualisé est ensuite découpé pour définir des modèles de dent « actualisés », comme décrit ci-après pour le modèle de référence initial.

Pour limiter le nombre de rendez-vous chez l'orthodontiste, le modèle de référence actualisé est en effet de préférence créé à partir d'un modèle de référence initial.

Le modèle de référence initial est réalisé à un instant initial, de préférence moins de 6 mois, de préférence moins de 3 mois ou moins d'un mois ou moins de 2 semaines après ou avant le début du traitement orthodontique appliqué au patient.

Le modèle de référence initial est par exemple du type .stl ou .Obj, .DXF 3D, IGES, STEP, VDA, ou Nuages de points. Avantageusement, un tel modèle, dit « 3D », peut être observé selon un angle quelconque.

Le modèle de référence initial peut être préparé à partir de mesures effectuées sur les dents du patient ou sur un modèle physique de ses dents, par exemple un modèle en plâtre.

Le modèle de référence initial est de préférence créé au moyen d'un appareil professionnel, par exemple au moyen d'un scanner 3D, de préférence mis en oeuvre par un professionnel de la santé, par exemple par un orthodontiste ou un laboratoire d'orthodontie. Dans un cabinet d'orthodontie, le patient ou le modèle physique de ses dents peuvent être avantageusement disposés dans une position précise et l'appareil professionnel peut être perfectionné. Il en résulte un modèle de référence initial très précis. Le modèle de référence initial fournit de préférence une information sur le positionnement des dents avec une erreur inférieure à 5/10 mm, de préférence inférieure à 3/10 mm, de préférence inférieure à 1/10 mm.

Le modèle de référence initial est ensuite découpé pour définir des modèles de dent « initiaux ».

Le découpage d'un modèle tridimensionnel en modèles de dent est une opération classique par laquelle le modèle est découpé afin de délimiter la représentation d'une ou plusieurs des dents. Les modèles de dents peuvent être par exemple définis comme décrit, par exemple, dans la demande internationale PCT/EP2015/074896.

Le découpage peut être partiellement automatisé.

La figure 4 représente un exemple d'un modèle de référence dont les modèles de dent 32 ont été découpés (seuls les modèles de dent sont représentés ; ils sont d'aspects différents afin d'être plus facilement identifiables).

Le modèle de référence initial ainsi découpé peut être ensuite déformé, par déplacement des modèles de dent initiaux, de préférence sans modification des modèles de dent initiaux, pour simuler l'effet du temps entre l'instant initial et l'instant actualisé, en particulier pour simuler le traitement orthodontique jusqu'à l'instant actualisé.

L'intervalle temporel entre les instants initial et actualisé peut être inférieur à 4 semaines, inférieur à 2 semaines, inférieur à une semaine. Cet intervalle temporel peut être également supérieur à quatre semaines ou supérieur à 1 mois, par exemple si la gouttière n'est pas la première gouttière utilisée pour le traitement orthodontique et que le modèle de référence initial a été réalisé au début du traitement.

Pour effectuer cette mise à jour du modèle de référence initial, on utilise de préférence une image actualisée, prise à l'instant actualisé, avec un appareil d'acquisition d'images, de préférence un téléphone mobile, un appareil photo dit « connecté », une montre dite « intelligente », ou « smartwatch », une tablette ou un ordinateur personnel, fixe ou portable, comportant un système d'acquisition d'images, comme une webcam ou un appareil photo.

L'image actualisée est extra-orale.

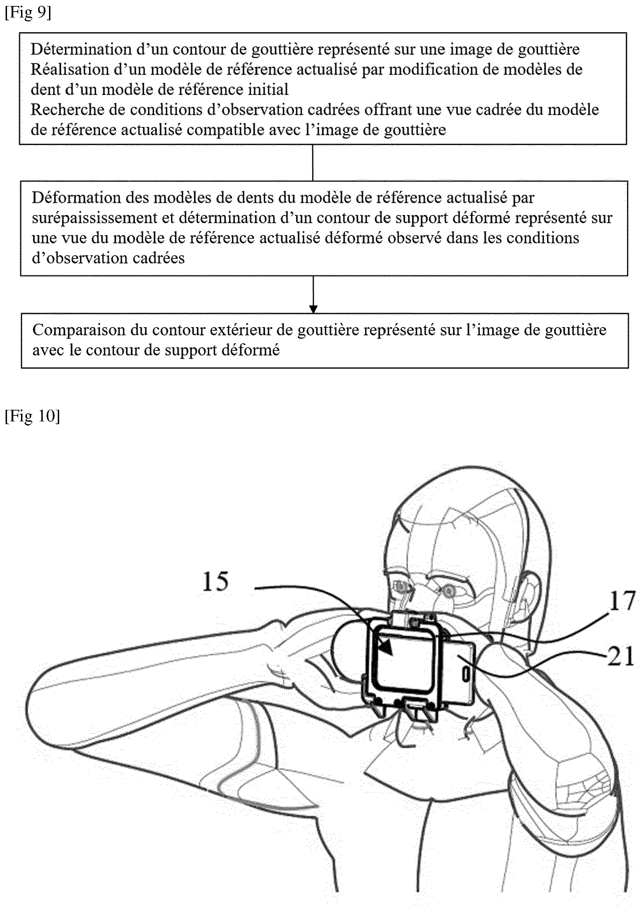

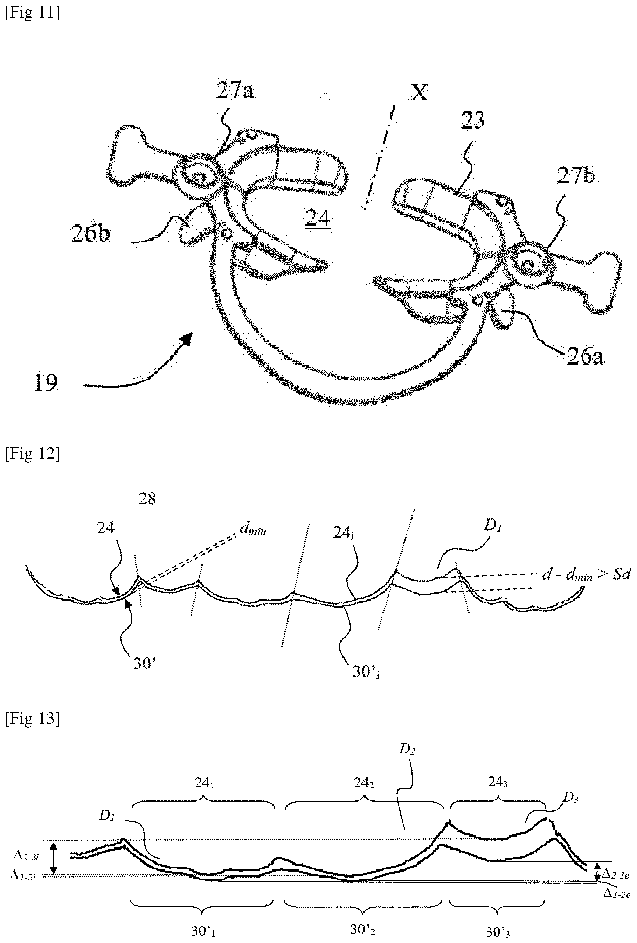

De préférence, on utilise un kit de prise de photos 15, comme illustré sur les figures 10 et 11. De préférence, un tel kit comporte un support 17, un écarteur dentaire 19, et un appareil d'acquisition, de préférence un téléphone portable 21. L'écarteur dentaire 19 et l'appareil d'acquisition sont de préférence fixés de manière amovible sur le support 17.

L'écarteur 19 peut présenter les caractéristiques des écarteurs conventionnels.

Comme représenté sur la figure 11 (où il a été séparé du support), il comporte de préférence un rebord 23 s'étendant autour d'une ouverture d'écarteur d'axe X et agencé de manière que les lèvres du patient puissent y reposer en laissant apparaître les dents du patient à travers ladite ouverture d'écarteur.

L'écarteur 14 peut être fixé sur le support par une ou plusieurs attaches 27a et 27b, par exemple des attaches magnétiques.

De préférence, l'écarteur comporte des oreilles d'écartement des joues 26a et 26b afin que l'appareil d'acquisition, fixé sur le support, puisse acquérir, à travers l'ouverture d'écarteur, des photos de faces vestibulaires de dents disposée au fond de la bouche, comme des molaires. Cette caractéristique est particulièrement avantageuse pour la mise en oeuvre des procédés décrits dans PCT/EP2015/074897.

L'acquisition est de préférence réalisée par le patient ou un proche du patient, mais peut être réalisée par toute autre personne, notamment un dentiste ou un orthodontiste, de préférence sans imposer un positionnement précis de l'appareil d'acquisition d'images par rapport aux dents.

De préférence, l'image actualisée est une photographie ou est une image extraite d'un film. Elle est de préférence en couleurs, de préférence en couleurs réelles.

Dans un mode de réalisation, l'image actualisée est une image des dents en l'absence de la gouttière orthodontique, dite « image actualisée nue ». La mise à jour du modèle de référence initial en est facilitée, les dents étant bien visibles sur une image actualisée nue.

Dans un autre mode de réalisation, le patient porte la gouttière lors de l'acquisition de l'image actualisée. Autrement dit, la même image permet non seulement d'apercevoir le contour extérieur de gouttière, et donc servir ultérieurement d'image de gouttière, mais aussi de déterminer la position des dents à l'instant actualisé, pour mettre à jour le modèle de référence initial.

La mise à jour du modèle de référence initial à partir de l'image actualisée est de préférence effectuée au moyen d'un algorithme d'optimisation. Elle peut être également réalisée au moyen d'un réseau de neurones. Le réseau de neurones peut être en particulier choisi dans la liste ci-dessous.

De préférence, on met en oeuvre un processus itératif selon lequel, à chaque itération, un ou plusieurs modèles de dents sont déplacés, puis des conditions d'observation optimales du modèle initial ainsi modifié (dit « modèle de référence à tester ») sont déterminées, les conditions d'observation optimales étant définies comme les conditions permettant d'observer le modèle de référence à tester de manière que la vue dudit modèle soit la plus proche possible de l'image actualisée.

Les étapes c) à e) décrites dans PCT/EP2015/074896 sont de préférence mises en oeuvre :
c) analyse de l'image actualisée (également appelée « image actualisée » dans PCT/EP2015/074896) et réalisation d'une carte actualisée relative à une information discriminante ;
d) optionnellement, détermination, pour l'image actualisée, de conditions d'acquisition virtuelles grossières approximant les conditions d'acquisition réelles de ladite image actualisée ;
e) recherche, à partir de la carte actualisée, d'un modèle de référence actualisé correspondant au positionnement des dents lors de l'acquisition de l'image actualisée, la recherche étant de préférence effectuée au moyen d'une méthode métaheuristique, de préférence évolutionniste, de préférence par recuit simulé.

Toutes les caractéristiques des étapes c) à e) décrites dans PCT/EP2015/074896 sont applicables.

Suivant l'étape c), l'image actualisée est analysée de manière à réaliser une carte actualisée relative à au moins une information discriminante.

Une "information discriminante" est une information caractéristique qui peut être extraite d'une image (*"image feature"*), classiquement par un traitement informatique de cette image.

Une information discriminante peut présenter un nombre variable de valeurs. Par exemple, une information de contour peut être égale à 1 ou 0 selon qu'un pixel appartient ou non à un contour. Une information de brillance peut prendre un grand nombre de valeurs. Le traitement de l'image permet d'extraire et de quantifier l'information discriminante.

La carte actualisée représente une information discriminante dans le référentiel de l'image actualisée. L'information discriminante est de préférence choisie dans le groupe constitué par une information de contour, une information de couleur, une information de densité, une information de distance, une information de brillance, une information de saturation, une information sur les reflets et des combinaisons de ces informations.

A l'étape optionnelle d), on évalue, de manière grossière, les conditions d'acquisition réelles de l'image actualisée, c'est-à-dire la position et l'orientation dans l'espace de l'appareil d'acquisition par rapport aux dents et sa calibration. L'étape d) permet avantageusement de limiter le nombre de tests sur des conditions d'acquisition virtuelles lors de l'étape e), et permet donc d'accélérer considérablement l'étape e).

On utilise de préférence une ou plusieurs règles heuristiques. Par exemple, de préférence, on exclut des conditions d'acquisition virtuelles susceptibles d'être testées à l'étape e), les conditions qui correspondent à une position de l'appareil d'acquisition d'images derrière les dents ou à une distance des dents supérieure à 1 m. Dans un mode de réalisation préféré, on utilise des marques de repérage représentées sur l'image actualisée pour déterminer une région de l'espace sensiblement conique délimitant des conditions d'acquisition virtuelles susceptibles d'être testées à l'étape e), ou "cône de test".

L'objectif de l'étape e) est de modifier le modèle de référence initial jusqu'à obtenir un modèle de référence actualisé qui corresponde à l'image actualisée. Idéalement, le modèle de référence actualisé est donc un modèle de référence tridimensionnel numérique à partir duquel l'image actualisée aurait pu être prise si ce modèle avait été réel.

On teste donc une succession de modèles de référence « à tester », le choix d'un modèle de référence à tester dépendant de préférence du niveau de correspondance des modèles de référence « à tester » précédemment testés avec l'image actualisée. Ce choix est de préférence effectué en suivant un procédé d'optimisation connu, en particulier choisi parmi les procédés d'optimisation métaheuristiques, de préférence évolutionnistes, en particulier dans les procédés de recuit simulé.

Les méthodes d'optimisation décrites dans PCT/EP2015/074896 sont notamment utilisables.

De préférence, l'étape e) comporte les étapes suivantes :
e1) définition d'un modèle de référence à tester comme étant le modèle de référence initial puis,
e2) suivant les étapes suivantes, test de conditions d'acquisition virtuelles avec le modèle de référence à tester afin d'approximer finement lesdites conditions d'acquisition réelles ;
   e21) détermination de conditions d'acquisition virtuelles à tester;
   e22) réalisation d'une image de référence bidimensionnelle du modèle de référence à tester dans lesdites conditions d'acquisition virtuelles à tester ;
   e23) traitement de l'image de référence pour réaliser au moins une carte de référence représentant, au moins partiellement, ladite information discriminante ;
   e24) comparaison des cartes actualisée et de référence de manière à déterminer une valeur pour une première fonction d'évaluation, ladite valeur pour la première fonction d'évaluation dépendant des différences entre lesdites cartes actualisée et de référence et correspondant à une décision de poursuivre ou de stopper la recherche de conditions d'acquisition virtuelles approximant lesdites conditions d'acquisition réelles de l'image actualisée avec plus d'exactitude que lesdites conditions d'acquisition virtuelles à tester déterminées à la dernière occurrence de l'étape e21) ;
   e25) si ladite valeur pour la première fonction d'évaluation correspond à une décision de poursuivre ladite recherche, modification des conditions d'acquisition virtuelles à tester, puis reprise à l'étape e22) ;
e3) détermination d'une valeur pour une deuxième fonction d'évaluation, ladite valeur pour la deuxième fonction d'évaluation dépendant des différences entre les cartes actualisée et de référence dans les conditions d'acquisition virtuelles approximant au mieux lesdites conditions d'acquisition réelles et résultant de la dernière occurrence de l'étape e2), ladite valeur pour la deuxième fonction d'évaluation correspondant à une décision de poursuivre ou de stopper la recherche d'un modèle de référence approximant le positionnement des dents lors de l'acquisition de l'image actualisée avec plus d'exactitude que ledit modèle de référence à tester utilisé à la dernière occurrence de l'étape e2), et si ladite valeur pour la deuxième fonction d'évaluation correspond à une décision de poursuivre ladite recherche, modification du modèle de référence à tester par déplacement d'un ou plusieurs modèles de dents, puis reprise à l'étape e2).

Les étapes e1) à e3) sont décrites en détail dans PCT/EP2015/074896, ou WO2016066651.

Le modèle de référence actualisé obtenu à l'issue de l'étape e) est un modèle tridimensionnel résultant de modifications successives du modèle de référence initial, très précis. Avantageusement, il est ainsi lui-même très précis, bien qu'il ait été obtenu à partir de simples photographies prises sans précautions particulières.

Dans la mesure où les dents sont sensiblement indéformables, le déplacement des modèles de dents du modèle de référence initial permet d'obtenir un modèle de référence actualisé qui peut être observé dans des conditions d'observation dans lesquelles la vue du modèle de référence actualisé est compatible avec l'image actualisée. Autrement dit, cette vue peut être superposée « en registre » à l'image actualisée de manière que les dents représentées sur la vue et sur l'image actualisée se superposent sensiblement exactement.

La mise à jour du modèle de référence initial peut être affinée en répétant les opérations précédentes avec plusieurs images actualisées. Elle conduit à un modèle de référence actualisé qui représente les dents sensiblement dans leur configuration à l'instant actualisé.

### Acquisition de l'image de gouttière

Indépendamment de la réalisation du modèle de référence actualisé, on acquiert, à l'instant actualisé, une image de gouttière 36, c'est-à-dire une image de l'arcade du patient qui porte la gouttière.

L'image de gouttière est de préférence acquise comme l'image actualisée décrite ci-dessous, de préférence avec un téléphone mobile, de préférence avec un kit d'acquisition comportant un support sur lequel sont fixés le téléphone mobile et un écarteur dentaire, comme celui décrit ci-dessus.

L'image de gouttière est extra-orale.

### Cadrage

On recherche ensuite des conditions permettant d'observer le modèle de référence actualisé et qui correspondent aux conditions d'observation des dents du patient dans lesquelles l'image de gouttière a été acquise. Ces conditions, qualifiées de « conditions d'observation cadrées », permettent d'observer le modèle de référence actualisé de manière que la vue dudit modèle soit la plus proche possible de l'image de gouttière.

La recherche des conditions d'observation cadrées conduit à virtuellement se déplacer autour du modèle de référence actualisé jusqu'à trouver une position « cadrée » compatible avec l'image de gouttière, c'est-à-dire dans laquelle on peut observer des dents ou des parties de dents comme elles auraient été représentées sur l'image de gouttière si la gouttière avait été transparente.

A cet effet, il est généralement possible d'identifier sur l'image de gouttière des repères dont on connaît la position dans le modèle de référence actualisé.

A défaut, il est possible d'acquérir une nouvelle image de gouttière et de reprendre la recherche de tels repères.

Les repères appartiennent de préférence à des dents que l'on sait immobiles, par exemple parce qu'elles ne sont pas traitées (si de telles dents sont visibles sur l'image de gouttière) ou à des parties de la gouttière en contact avec de tels dents, et donc également immobiles. Les dents immobiles peuvent être facilement identifiées, puisqu'il s'agit des dents dont le modèle de dent n'a pas été déplacé lors de l'étape précédente. Dans un mode de réalisation, les repères sont des contours de gencive.

De préférence, on utilise au moins trois points non alignés comme repères. L'analyse des distances entre les représentations des ces repères sur l'image de gouttière permet alors, par simple calcul, d'évaluer les conditions d'observations cadrées.

Sur la vue du modèle de référence actualisé dans les conditions d'observation cadrées, les repères ont des positions relatives identiques à celles qu'ils ont dans l'image de gouttière.

Alternativement à l'utilisation de repères, la recherche des conditions d'observation cadrées peut être réalisée en suivant un procédé d'optimisation connu, en particulier choisi parmi les procédés d'optimisation métaheuristiques, de préférence évolutionnistes, en particulier parmi les procédés de recuit simulé.

Les méthodes d'optimisation décrites dans PCT/EP2015/074896 sont notamment utilisables.

Ces méthodes permettent avantageusement de guider le déplacement virtuel autour du modèle de référence actualisé jusqu'à l'obtention d'une concordance maximale entre la vue observée par l'appareil d'acquisition d'images virtuel et l'image de gouttière.

Dans un mode de réalisation, on procède suivant les étapes suivantes :
i. analyse de l'image de gouttière et réalisation d'une carte « de gouttière » relative à une information discriminante ;
ii. détermination de conditions d'acquisition virtuelles à tester ;
iii. acquisition d'une vue du modèle de référence actualisé dans lesdites conditions d'acquisition virtuelles à tester ;
iv. traitement de la vue pour réaliser au moins une carte de référence représentant, au moins partiellement, ladite information discriminante ;
v. comparaison des cartes de gouttière et de référence de manière à déterminer une valeur pour une fonction d'évaluation, ladite valeur dépendant des différences entre lesdites cartes de gouttière et de référence et correspondant à une décision de poursuivre ou de stopper la recherche de conditions d'acquisition virtuelles approximant lesdites conditions d'acquisition réelles de l'image de gouttière avec plus d'exactitude que lesdites conditions d'acquisition virtuelles à tester déterminées à la dernière occurrence de l'étape ii ;
vi. si ladite valeur pour la fonction d'évaluation correspond à une décision de poursuivre ladite recherche, modification des conditions d'acquisition virtuelles à tester, puis reprise à l'étape iii,
sinon, détermination des conditions d'observation cadrées comme étant les dernières conditions d'acquisition virtuelles testées.

A l'étape i., on fait de préférence abstraction de la représentation de la gouttière sur l'image de gouttière. De préférence, on ne considère que les contours des dents visibles sur l'image de gouttière.

La recherche conduit à des conditions d'observation cadrées du modèle de référence actualisé qui offrent une vue cadrée dans laquelle les représentations des dents sont superposables en registre avec les représentations des dents sur l'image de gouttière, c'est-à-dire de manière que les dents représentées sur la vue cadrée et sur l'image de gouttière se superposent sensiblement exactement.

Alternativement à l'utilisation de repères, la recherche des conditions d'observation cadrées peut être encore réalisée au moyen d'un réseau de neurones.

Un « réseau de neurones » ou « réseau neuronal artificiel » est un ensemble d'algorithmes bien connu de l'homme de l'art. Le réseau de neurones peut être en particulier choisi parmi :
- les réseaux spécialisés dans la classification d'images, appelés « CNN » (« Convolutional neural network »), par exemple
   - AlexNet (2012)
   - ZF Net (2013)
   - VGG Net (2014)
   - GoogleNet (2015)
   - Microsoft ResNet (2015)
   - Caffe: BAIR Reference CaffeNet, BAIR AlexNet
   - Torch:VGG_CNN_S,VGG_CNN_M,VGG_CNN_M_2048,VGG_CNN_M_10 24,VGG_CNN_M_128,VGG_CNN_F,VGG ILSVRC-2014 16-layer,VGG ILSVRC-2014 19-layer,Network-in-Network (Imagenet & CIFAR-10)
   - Google : Inception (V3, V4)
- les réseaux spécialisés dans la localisation, et détection d'objets dans une image, les Object Détection Network, par exemple :
   - R-CNN (2013)
   - SSD (Single Shot MultiBox Detector : Object Détection network), Faster R-CNN (Faster Region-based Convolutional Network method : Object Détection network)
   - Faster R-CNN (2015)
   - SSD (2015).

Les conditions d'observation cadrées sont sensiblement identiques aux conditions d'acquisition réelles au moment où l'image de gouttière a été acquise. En observant le modèle de référence actualisé dans les conditions d'observation cadrées, on observe donc les dents au moment où l'image de gouttière a été acquise. La vue du modèle de référence actualisé dans ces conditions d'acquisitions cadrées, ou « vue cadrée » est donc comparable à l'image de gouttière, mais sans la gouttière. En particulier, les formes et les dimensions des contours sur la vue cadrée sont comparables à celles des contours des dents visibles sur l'image de gouttière.

Le contour extérieur de la gouttière 24 sur l'image de gouttière n'est cependant pas parfaitement comparable aux contours des extrémités libres des dents représentées sur la vue cadrée. En effet, le contour extérieur de la gouttière n'est pas une simple translation de son contour intérieur. L'étape B) a pour objectif de modifier le modèle de référence actualisé pour obtenir un contour mieux adapté à une comparaison avec le contour extérieur de la gouttière.

**A l'étape** B), les modèles de dents 32 du modèle de référence actualisé (figure 6) sont déformés en fonction de la géométrie de la gouttière.

De préférence, la géométrie de la gouttière est évaluée avant sa mise en service, en position de repos.

De préférence, la déformation est déterminée en fonction de l'épaisseur de matière entre la surface intérieure de la gouttière et la surface extérieure de la gouttière. Les surfaces intérieure et extérieure de la gouttière peuvent être déterminées à tout instant avant l'étape B), de préférence avant la mise en service de la gouttière.

De préférence, les modèles de dents sont déformés pour que les surfaces de ces modèles qui définissent les extrémités libres desdits modèles s'étendent sensiblement suivant la surface extérieure de la représentation de la gouttière si cette gouttière était modélisée dans le modèle de référence actualisé dans sa position de service, en l'absence de décollement.

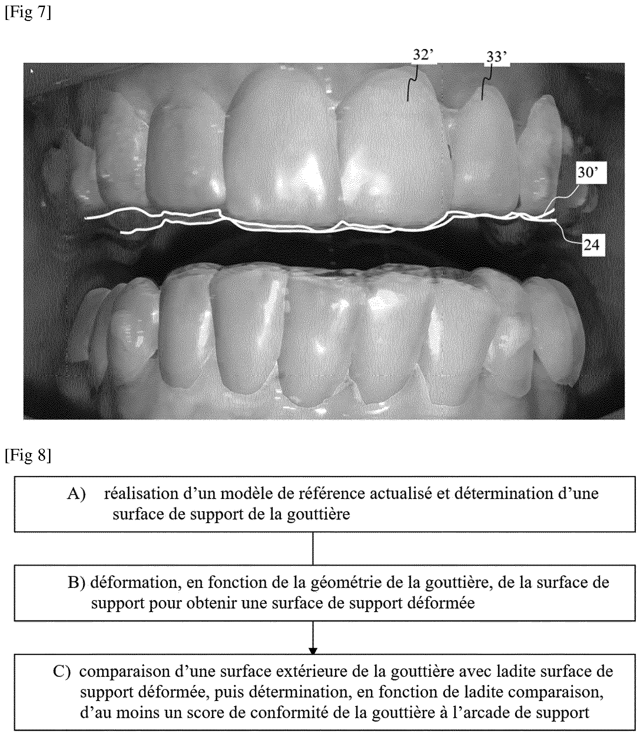

De préférence, la déformation simule un épaississement, de préférence constant, des dents modélisées. Les modèles de dents déformés 32' (figure 7) représentent donc les dents initialement modélisées à la surface desquelles une couche supplémentaire de matière aurait été déposée. Cette déformation est similaire à un gonflement des modèles de dent.

L'épaississement peut être constant, par exemple égal à l'épaisseur moyenne de la gouttière. De préférence, l'épaississement est supérieur à 0,5 mm, de préférence supérieur à 1 mm et/ou inférieur à 3 mm, de préférence inférieur à 2 mm.

Dans un mode de réalisation, la déformation locale d'un modèle de dent est déterminée en fonction de l'épaisseur locale de la gouttière.

« En fonction de la géométrie de la gouttière » ne signifie pas que la déformation appliquée doit être spécifique à chaque gouttière. Elle peut être en particulier déterminée pour un ensemble de gouttières présentant des caractéristiques communes, par exemple pour l'ensemble des gouttières produites par un fabricant. Dans un mode de réalisation, la déformation est constante quel que soit l'endroit de la surface du modèle de dent considérée.

Chaque modèle de dent est de préférence déformé individuellement, indépendamment de la présence des autres modèles de dent. Les déformations des modèles de dent peuvent ainsi conduire à la pénétration d'un modèle de dent dans un autre modèle de dent adjacent. Le modèle de référence actualisé déformé obtenu ne correspond plus alors à aucune réalité possible.

L'union, ou « fusion », des modèles de dents déformés est délimitée extérieurement par une surface de support déformée.

De préférence, la déformation est déterminée de manière que cette surface de support déformée ait sensiblement la même forme que la surface extérieure de la gouttière lorsque que la gouttière présente une forme adaptée au traitement dans sa position de service. Si la surface de support déformée n'a pas la même forme que la surface extérieure de la gouttière, la situation dentaire n'est pas parfaitement adaptée et l'orthodontiste peut considérer qu'elle est anormale et doit être corrigée.

La représentation de la surface extérieure de la gouttière sur l'image de gouttière est appelée « contour extérieur de gouttière » 24. La représentation de la surface de support déformée sur la vue du modèle de référence actualisée déformé, dans les conditions d'observations cadrées, est appelée « contour de support déformé » 30'. Une situation dentaire inadaptée peut donc être détectée par comparaison de ces contours.

### À l'étape C), on effectue une telle comparaison.

On observe le modèle de référence actualisé déformé dans les conditions d'observation cadrées et on détermine le contour de support déformé sur la vue cadrée 38 obtenue. De manière analogue, on analyse l'image de gouttière pour déterminer le contour extérieur de gouttière.

L'homme de l'art sait comment traiter une image ou une vue pour isoler un contour. Ce traitement comporte par exemple l'application de masques ou de filtres bien connus, fournis avec des logiciels de traitement d'images. De tels traitements permettent par exemple de détecter les régions de fort contraste.

Ces traitements comprennent notamment une ou plusieurs des méthodes connues et préférées suivantes, à savoir :
- par application d'un filtre Canny, notamment pour rechercher des contours en utilisant l'algorithme de Canny ;
- par application d'un filtre Sobel, notamment pour calculer des dérivées au moyen de l'opérateur étendu de Sobel ;
- par application d'un filtre de Laplace, pour calculer le laplacien d'une image ;
- par détection de tâches sur une image (« Blobdetecor ») ;
- par application d'un seuil (« Threshold ») pour appliquer un seuil fixe à chaque élément d'un vecteur ;
- par redimensionnement, en utilisant des relations entre les zones de pixels (« Resize(Area) ») ou des interpolations bi-cubiques sur l'environnement des pixels ;
- par érosion de l'image au moyen d'un élément spécifique structurant ;
- par dilatation de l'image au moyen d'un élément spécifique structurant ;
- par retouche, en particulier en utilisant des régions au voisinage de la zone restaurée ;
- par application d'un filtre bilatéral ;
- par application d'un flou gaussien ;
- par application d'un filtre d'Otsu, pour rechercher le seuil qui minimise la variance intra-classes ;
- par application d'un filtre A*, pour rechercher un chemin entre des points ;
- par application d'un seuil adaptatif (« Adaptive Threshold ») pour appliquer un seuil adaptatif à un vecteur ;
- par application d'un filtre d'égalisation d'un histogramme d'une image en nuances de gris en particulier ;
- par détection de flou ("BlurDetection"), pour calculer l'entropie d'une image en utilisant son laplacien ;
- par détection de contours (« FindContour ») d'une image binaire ;
- par remplissage de couleurs ("FloodFill"), notamment pour remplir un élément connecté avec une couleur déterminée.

Les méthodes non limitatives suivantes, bien qu'elles ne soient pas préférées, peuvent être également mises en oeuvre :
- par application d'un filtre "MeanShift", de manière à trouver un objet sur une projection de l'image ;
- par application d'un filtre « CLAHE », pour « Contrast Limited Adaptive Histogram Equalization » ;
- par application d'un filtre « Kmeans", pour déterminer le centre de clusters et de groupes d'échantillons autour de clusters ;
- par application d'un filtre DFT, de manière à effectuer une transformation de Fourier discrète, directe ou inverse d'un vecteur ;
- par calcul de moments ;
- par application d'un filtre « HuMoments » pour calculer des invariants de Hu invariants ;
- par calcul de l'intégrale d'une image ;
- par application d'un filtre Scharr, permettant de calculer une dérivée de l'image en mettant en oeuvre un opérateur de Scharr ;
- par recherche de l'enveloppe convexe de points ("ConvexHull") ;
- par recherche de points de convexité d'un contour ("ConvexityDefects") ;
- par comparaison de formes (« MatchShapes ») ;
- par vérification si des points sont dans un contour (« PointPolygonTest ») ;
- par détection des contours Harris (« ComerHarris ») ;
- par la recherche des valeurs propres minimales de matrices de gradients, pour détecter les coins ("CornerMinEigenVal ») ;
- par application d'une transformée de Hough pour trouver des cercles dans une image en nuances de gris (« HoughCircles ») ;
- par "Active contour modeling" (traçage du contour d'un objet à partir d'une image 2D potentiellement « bruitée » ) ;
- par calcul d'un champ de forces, appelées GVF ("gradient vector flow"), dans une partie de l'image ;
- par classement en cascade (« CascadeClassification »).

La détermination des contours de dent peut être optimisée en suivant les enseignements de PCT/EP2015/074900.

La vue cadrée après déformation est de préférence superposée en registre à l'image de gouttière, de manière à superposer les éléments communs à la vue cadrée après déformation et à l'image de gouttière, par exemple les contours de gencive ou des contours de dents visibles à la fois sur la vue cadrée après déformation et sur l'image de gouttière. On positionne ainsi le contour extérieur de gouttière et le contour de support déformé relativement l'un à l'autre.

Dans un mode de réalisation, on fractionne le contour extérieur de gouttière et le contour de support déformé de manière à définir des portions de ces contours pour chaque dent. On appelle « contours de dent extérieur » 24ᵢ et « contours de dent intérieur » 30'ᵢ les portions du contour extérieur de gouttière et du contour de support déformé. Les adjectifs « intérieur » et « extérieur » ne sont utilisés ici qu'à des fins de clarté, respectivement. Sur la figure 12, les segments en traits pointillés séparent les portions successives.

La comparaison peut être alors effectuée par tout moyen, et notamment comme la comparaison des contours de dent intérieur et extérieur décrite dans EP3412245.

En particulier, on peut, pour chacune d'une pluralité de dents pour lesquelles des contours de dent intérieur et extérieur ont été déterminés, procéder suivant les étapes suivantes :
i) détermination d'une distance entre les contours de dent intérieur et extérieur ;
ii) détermination d'un seuil de distance, de préférence à partir des distances déterminées à l'étape i) ;
iii) pour chacune desdites dents, détermination d'un score en distance, en fonction
   - de la distance entre les contours de dent intérieur et extérieur et
   - du seuil de distance.

A l'étape i), on détermine une distance d entre les contours de dent intérieur et extérieur de chacune desdites dents (figure 12).

La distance entre les contours de dent intérieur et extérieur d'une dent peut être par exemple la distance moyenne ou la distance maximale entre les pixels desdits contours correspondant à un même point de la dent.

La distance est de préférence mesurée en pixels, ce qui avantageusement évite de devoir établir une échelle.

A l'étape ii), on détermine un seuil de distance *Sd*, de préférence à partir des distances déterminées à l'étape i).

De préférence, à l'étape ii), le seuil de distance *Sd* est sensiblement égal à la plus faible des distances déterminées à l'étape i) (*dₘᵢₙ*). Classiquement, au moins une des dents traitées est en contact avec le fond de la goulotte dans laquelle elle est insérée. La distance entre les contours de dent intérieur et extérieur de cette dent est alors égale à une distance minimale *dₘᵢₙ* correspondant à une situation normale. Elle peut donc servir d'étalon pour évaluer, à l'étape iii), les distances entre les contours de dent intérieur et extérieur des autres dents. A l'étape iii), on détermine, pour chacune des dents, un score dit « score en distance » *S*(*d*,*Sd*), en fonction
- de la distance d entre les contours de dent intérieur et extérieur et
- du seuil de distance *Sd*.

De préférence, le score en distance pour une dent est égal à (*d-Sd*), c'est-à-dire à la différence entre la distance entre les contours de dent intérieur et extérieur de cette dent et le seuil de distance. Plus le score en distance est élevé, plus la dent concernée est décollée de la goulotte.

La figure 12 illustre un exemple de mise en oeuvre des étapes i) à iii), dans lequel une dent D1 est décollée du fond de la gouttière et telle que *d* - *dₘᵢₙ > Sd.*

On peut également, pour chacune d'une pluralité de dents pour lesquelles des contours de dent intérieur et extérieur ont été déterminés, procéder suivant les étapes suivantes :
i') pour chaque couple d'une dent gauche et d'une dent droite adjacentes d'au moins un triplet de première, deuxième et troisième dents adjacentes pour chacune desquelles des contours de dent intérieur et extérieur ont été déterminés, les première et troisième dents étant adjacentes à la deuxième dent,
   détermination d'un décalage entre le contour de dent intérieur de ladite dent gauche et le contour de dent intérieur de ladite dent droite, dit « décalage intérieur », et détermination d'un décalage entre le contour de dent extérieur de ladite dent gauche et le contour de dent extérieur de ladite dent droite, dit « décalage extérieur »,
   puis
   détermination de la différence entre le décalage intérieur et le décalage extérieur, dite « différence de décalages » ;
ii') détermination d'un seuil de différence de décalages, de préférence à partir des différences de décalages déterminées à l'étape i') ;
iii') détermination, pour au moins une, de préférence pour chaque dent dudit triplet, d'au moins un score en décalage, en fonction de la différence de décalages avec une dent adjacente et du seuil de différence de décalages.

A l'étape i'), on considère au moins triplet constitué de première, deuxième et troisième dents, D1, D2 et D3, respectivement, les première et troisième dents étant adjacentes à la deuxième dent, c'est-à-dire les première, deuxième et troisième dents se succédant le long d'une arcade.

On détermine les contours de dent intérieurs 30'₁, 30'₂ et 30'₃, et extérieurs 24₁, 24₂ et 24₃, respectivement, des dents D1, D2 et D3, respectivement.

Un « décalage » intérieur ou extérieur, respectivement, représente une distance entre les contours de dent intérieur ou extérieur, respectivement, de deux dents adjacentes.

On détermine
- un décalage entre le contour de dent intérieur de ladite première dent 30'₁ et le contour de dent intérieur de ladite deuxième dent 30'₂, dit « premier décalage intérieur », Δ₁₋₂i ;
- un décalage entre le contour de dent intérieur de ladite deuxième dent 30'₂ et le contour de dent intérieur de ladite troisième dent 30'₃, dit « deuxième décalage intérieur », Δ₂₋₃i ;
- un décalage entre le contour de dent extérieur de ladite première dent 24₁ et le contour de dent extérieur de ladite deuxième dent 24₂, dit « premier décalage extérieur », Δ₁₋₂e ;
- décalage entre le contour de dent extérieur de ladite deuxième dent 24₂ et le contour de dent extérieur de ladite troisième dent 24₃, dit « deuxième décalage extérieur », Δ₂₋₃e.

Le décalage intérieur entre les contours de dent intérieurs de deux dents adjacentes est de préférence égal à la plus grande distance entre les contours de dent intérieurs de ces deux dents.

Le décalage extérieur entre les contours de dent extérieurs de deux dents adjacentes est de préférence égal à la plus grande distance entre les contours de dent extérieurs de ces deux dents.

Les décalages intérieurs et les décalages extérieurs sont de préférence mesurés en pixels, ce qui avantageusement évite de devoir établir une échelle.

On détermine ensuite :
- la différence entre le premier décalage intérieur Δ₁₋₂i et le premier décalage extérieur A₁₋₂e, dite « première différence de décalages » Δ₁₋₂ (= Δ₁₋₂i - Δ₁₋₂e) ;
- la différence entre le deuxième décalage intérieur Δ₂₋₃i et le deuxième décalage extérieur Δ₂₋₃e, dite « deuxième différence de décalages » Δ₂₋₃ (= Δ₂₋₃i - Δ₂₋₃e).

Dans l'exemple de la figure 12, Δ₁₋₂ est beaucoup plus faible que Δ₂₋₃.

A l'étape ii'), on détermine un seuil de différence de décalages *S*Δ, de préférence à partir des première et deuxième différences de décalages Δ₁₋₂ et Δ₂₋₃ déterminées à l'étape i').

De préférence, à l'étape ii'), le seuil de décalage est sensiblement égal à la plus petite des différences de décalages déterminées à l'étape i').

Classiquement, au moins deux dents traitées adjacentes sont en contact avec le fond de la goulotte dans laquelle elles sont insérées. La différence de décalages entre ces deux dents traitées est alors sensiblement nulle. Cette différence de décalages nulle correspondant à une situation normale, elle peut donc servir d'étalon pour évaluer les différences de décalages entre les dents traitées adjacentes.

Sur la figure 13, la différence de décalages entre les deux dents D₁ et D₂ est sensiblement nulle.

A l'étape iii'), on détermine pour chaque couple de dents dudit triplet, au moins un score, dit « score en décalage », en fonction de la différence de décalages avec une dent adjacente à ladite dent et du seuil de différence de décalages.

En particulier, la différence de décalages de la première dent avec la deuxième dent peut être comparée au seuil de différence de décalages SΔ, par exemple de zéro. Le seuil de différence de décalages peut être notamment soustrait à la différence de décalages de la première dent avec la deuxième dent pour déterminer un score en décalage des première et deuxième dents. Ce score en décalage indique, par exemple s'il est positif, qu'une ou chacune des première et deuxième dents est susceptible d'être décollée du fond de la goulotte.

Sur la figure 13, la différence de décalages entre les deux dents D₂ et D₃ est positive, ce qui constitue un indice de décollement de la deuxième ou de la troisième dent.

Sur la figure 13, la différence de décalages entre les deux dents D₁ et D₂ étant sensiblement nulle, la différence positive de décalages entre les deux dents D₂ et D₃ indique donc un décollement de la troisième dent.

De manière générale, quand un premier score en décalage pour des première et deuxième dents indique un décollement d'une de ces deux dents, on détermine un deuxième score en décalage pour la deuxième dent et une troisième dent adjacente à la deuxième dent. Si le deuxième score en décalage est inférieur au premier score en décalage, il est probable que c'est la première dent qui s'est décollée du fond de la goulotte. Sinon, c'est probablement la deuxième dent qui s'est décollée.

De manière générale, à l'étape C), on compare les formes de ladite surface extérieure et de la surface de support déformée, puis on détermine le score de conformité en fonction de la différence de forme entre ladite surface extérieure et la surface de support déformée. Autrement dit, le score de conformité est représentatif de cette différence de forme.

L'homme de l'art connaît de nombreuses façons pour comparer les formes de la surface extérieure de la gouttière et de la surface de support déformée. Notamment, il connaît de nombreuses façons de calculer un score de conformité représentatif de cette différence de forme. En particulier, le score de conformité peut être égal à une distance moyenne entre les deux surfaces lorsqu'elles sont superposées l'une sur l'autre le mieux possible (« best fit »).

La surface extérieure de la gouttière est de préférence représentée, par exemple sur un modèle 3D ou une image, puis la représentation de la surface extérieure de la gouttière est comparée à la surface de support déformée. La représentation de la surface extérieure de la gouttière peut être générée à tout instant avant son utilisation, à l'étape B) ou à l'étape C).

En particulier, à l'étape C), on peut positionner, ou « caler », une représentation de ladite surface extérieure par rapport à la surface de support déformée de manière à superposer en registre au moins une région de ladite représentation avec ladite surface de support déformée, ladite région étant une région couvrant, dans la position de service, au moins une dent de l'arcade de support non décollée de la gouttière.

Le calage peut en particulier consister à positionner la représentation de la surface extérieure au-dessus de la surface de support déformée et au plus près de la surface de support déformée. Les portions de la surface de support déformée représentant des dents qui sont restées en contact avec la surface intérieure de la gouttière, c'est-à-dire qui ne se sont pas décollées, sont alors confondues avec des portions correspondantes de la représentation de la surface extérieure de la gouttière. Les portions de la surface de support déformée représentant des dents qui se sont décollées sont écartées des portions correspondantes de la représentation de la surface extérieure. La distance entre ces portions est représentative du décollement.

Ensuite, on peut déterminer le score de conformité en fonction de l'écartement entre la représentation de ladite surface extérieure ainsi positionnée et la surface de support déformée. Par exemple, on peut mesurer la distance entre ces surfaces en un ou plusieurs points de la surface de support déformée, de préférence en tout point de la surface de support déformée. Ladite distance peut être mesurée en pixels.

Le score de conformité de la gouttière à l'arcade de support est déterminé en fonction du résultat de la comparaison, de préférence en fonction desdites distances.

Le score de conformité de la gouttière à l'arcade de support peut être déterminé en considérant une ou plusieurs des dents.

L'homme du métier connaît de nombreuses variantes pour calculer un score de conformité.

Dans un mode de réalisation, on évalue un score de conformité « élémentaire » pour une seule dent ou, de préférence, pour chacune d'une pluralité des dents, de préférence pour chaque dent représentée(s), au moins partiellement, par la surface de support, puis on calcule le score de conformité de la gouttière à l'arcade de support à partir de ces scores de conformité élémentaires. Avantageusement, les scores de conformité élémentaires permettent de localiser les dents qui sont décollées, mais aussi de déterminer l'ampleur du décollement pour chacune de ces dents.

Par exemple, pour une dent, le score de conformité élémentaire peut être égal, en considérant tout ou partie des points de la surface de support déformée qui représentent ladite dent, à la moyenne des carrés des distances entre la portion de la surface de support déformée représentant la dent et la portion correspondante de la représentation de la surface extérieure de la gouttière, après avoir effectué ledit calage. Il peut être aussi égal à la moyenne arithmétique desdites distances.

A la place des distances entre la portion de la surface de support déformée représentant la dent et la portion correspondante de la représentation de la surface extérieure de la gouttière, on peut utiliser les distances de tout ou partie des points de la portion de la surface de support déformée représentant la dent et des points correspondant de la représentation de la surface extérieure de la gouttière, par rapport à un objet de référence, par exemple un plan ou un axe de référence. Par exemple, le score de conformité élémentaire peut être égal à la différence entre
- la distance moyenne, avec l'objet de référence, des points de la portion de la surface de support déformée représentant la dent, et
- la distance moyenne, avec l'objet de référence, des points correspondant de la représentation de la surface extérieure de la gouttière.

Le score de conformité pour une dent peut être également évalué au moyen d'un réseau de neurones entraîné à cette fin, de préférence du type réseau siamois ou de régression. Un tel entraînement ne pose pas de difficulté à l'homme du métier.

Le score de conformité pour une dent peut être aussi déterminé à partir d'une carte desdites distances, suivant toutes les techniques connues.

Le score de conformité pour une dent peut être encore évalué suivant les méthodes décrites ci-dessus, mais en comparant les enveloppes convexes de la représentation de la surface extérieure de la gouttière et de la portion de la surface de support déformée représentant la dent. Les distances sont alors mesurées entre ces enveloppes convexes.

Lorsque la surface extérieure de la gouttière et la surface de support déformée sont représentées sur une image, le score de conformité pour une dent peut être encore déterminé, après calage, par comparaison des contours de la dent, sur l'image, représentant la surface extérieure de la gouttière et représentant la surface de support déformée. Le score de conformité pour la dent peut être par exemple la différence entre les moments de ces contours calculés avec la formule de Green ou entre les moments invariants de ces contours calculés avec la formule de Hu, ou encore par une distance de ces deux contours à une même fonction polynomiale.

Le score de conformité de la gouttière à l'arcade de support peut être déterminé en fonction des scores de conformité élémentaires, par exemple peut être égale à la moyenne de l'ensemble des scores de conformité élémentaires, ou au plus petit score de conformité élémentaire.

Le score de conformité de la gouttière à l'arcade de support peut être également déterminé directement, sans déterminer des scores de conformité élémentaires. Les méthodes décrites ci-dessus pour le calcul des scores de conformité élémentaires peuvent être utilisés pour déterminer directement le score de conformité de la gouttière à l'arcade de support, en considérant plusieurs, de préférence toutes les dents représentée(s), au moins partiellement, par la surface de support déformée.

La comparaison de la surface extérieure de la gouttière avec la surface de support déformée permet ainsi de détecter, de préférence d'évaluer d'éventuels décollements de la gouttière.

De préférence, une information, par exemple un avertissement, est envoyée à un opérateur, pour l'informer, le cas échéant, que la situation est anormale. L'information relative à une dent dépend du score de conformité. De préférence, l'information comporte une valeur permettant de quantifier, pour au moins une dent, le niveau de décollement de la gouttière au-dessus de cette dent, cette valeur étant de préférence établie à partir du score de conformité élémentaire calculé pour cette dent.

Dans un mode de réalisation, cette information est utilisée pour établir un diagnostic et/ou pour modifier le traitement, en particulier pour préconiser un changement de gouttière et/ou déterminer des caractéristiques d'une future gouttière pour le patient.

Comme cela apparaît clairement à présent, de manière générale, à l'étape A), on identifie une surface du modèle de référence actualisé qui porte (ou « supporte ») la gouttière. Cette identification, de préférence réalisée par ordinateur, est possible par tout moyen. Ensuite, à l'étape B), on déforme cette surface en fonction de caractéristiques dimensionnelles de la gouttière prédéfinies, de préférence de son épaisseur locale. A l'étape C), on compare la surface déformée obtenue avec la surface extérieure de la gouttière, par exemple par comparaison d'une vue du modèle de référence actualisé ainsi déformé avec une image représentant la gouttière. Il est ainsi possible de contrôler un éventuel décollement de la gouttière.

Un procédé selon l'invention permet ainsi, à partir de simples photos ou d'un simple film, de déterminer les régions dans lesquelles la gouttière s'est écartée des dents et d'évaluer l'ampleur de ce décollement. Cette évaluation est avantageusement fiable, même lorsque la gouttière ne permet pas de distinguer les dents logées dans la gouttière.

L'invention peut être mise en oeuvre par tout appareil électronique ayant des capacités de traitement informatique. Classiquement, un tel appareil comporte en particulier un processeur, une mémoire, et des bus de communication. Un programme informatique configuré pour mettre en oeuvre un procédé de l'invention est chargé dans la mémoire. De préférence, l'appareil électronique comporte une interface homme-machine, comportant classiquement un écran, un module de communication par internet, par WIFI, par Bluetooth^{®} ou par le réseau téléphonique. Il peut être également connecté à une imprimante.

Un procédé selon l'invention peut être en particulier mis en oeuvre avec un PC, une tablette, un téléphone mobile, ou un serveur.

Bien entendu, l'invention n'est pas limitée aux modes de réalisation décrits ci-dessus et représentés.

De manière générale, selon l'invention, on peut procéder par tout moyen à une comparaison de la surface extérieure de la gouttière avec la surface de support déformée.

La comparaison de ces surfaces est de préférence réalisée par comparaison de représentations de ces surfaces sur l'image de gouttière et sur la vue du modèle de référence actualisé déformé obtenue dans les conditions d'observation cadrées, superposable en registre avec l'image de gouttière. Cependant, dans un mode de réalisation, on réalise, avant l'étape C), un modèle tridimensionnel numérique d'au moins la surface extérieure de la gouttière, ou « modèle de gouttière », par exemple avec un scanner, de préférence alors que la gouttière est dans la position de service, et, à l'étape C), on compare directement le modèle de gouttière avec ladite surface de support déformée.

Enfin, le patient n'est pas limité à un être humain. En particulier, un procédé selon l'invention peut être utilisé pour un autre animal.

## Revendications

1. Programme d'ordinateur comprenant des instructions de code de programme pour la mise en oeuvre, lorsque le programme est exécuté par ordinateur, d'un procédé d'évaluation, à un instant dit « instant actualisé », de la conformité d'une gouttière orthodontique (10) à une arcade dentaire d'un patient sur laquelle ladite gouttière prend appui, dite « arcade de support » (13), ladite gouttière ayant une surface intérieure (12) et une surface extérieure (14), ledit procédé comportant les étapes successives suivantes :
A) réalisation d'un modèle tridimensionnel numérique de l'arcade de support, dans sa configuration à l'instant actualisé, ou « modèle de référence actualisé » (31), et détermination, dans le modèle de référence actualisé, d'une surface de support (33) de la gouttière, la surface de support étant une surface du modèle de référence actualisé qui modélise partiellement ou complètement la surface de l'arcade de support sur laquelle la gouttière prend appui dans la position de service ;
B) déformation de la surface de support, en fonction de l'épaisseur de matière entre la surface intérieure (12) de la gouttière et la surface extérieure (14) de la gouttière, pour obtenir une surface de support déformée (33') ;
C) comparaison d'une surface extérieure de la gouttière (14) avec ladite surface de support déformée de manière à évaluer la différence entre la surface extérieure de la gouttière (14) et ladite surface de support déformée, puis détermination, en fonction de ladite différence, d'au moins un score de conformité de la gouttière à l'arcade de support,
la gouttière comportant une surface intérieure (12) opposée à la surface extérieure (14).

2. Programme d'ordinateur selon la revendication précédente, dans lequel ladite déformation est d'amplitude constante en tout point de la surface de support (33) et/ou est, en un point de la surface de support (33), déterminée en fonction de la distance entre les surfaces intérieure (12) et extérieure (14) de la gouttière en un point (M) de la surface intérieure de la gouttière destiné à être, dans une position de service, en contact avec ledit un point de la surface de support.

3. Programme d'ordinateur selon l'une quelconque des revendications précédentes, dans lequel, à l'étape B), on déforme la surface de support (33), de préférence au moins la partie de la surface de support qui définit les extrémités libres (22) des dents de ladite arcade, de manière que la surface de support déformée (33') s'étende sensiblement suivant la surface extérieure de la représentation de la gouttière si cette gouttière était modélisée dans le modèle de référence actualisé (31) dans la position de service, en l'absence de décollement de la gouttière.

4. Programme d'ordinateur selon l'une quelconque des revendications précédentes, dans lequel ladite déformation est un gonflement de la surface de support d'une amplitude sensiblement égale à ladite distance entre les surfaces intérieure (12) et extérieure (14) de la gouttière.

5. Programme d'ordinateur selon l'une quelconque des revendications précédentes, dans lequel, à l'étape A), on découpe le modèle de référence actualisé de manière à définir, pour chaque dent représentée dans le modèle de référence actualisé, un modèle de référence tridimensionnel numérique de ladite dent, ou « modèle de dent actualisé » (32), et dans lequel, à l'étape B), on déforme la surface de chaque modèle de dent actualisé pour obtenir un modèle de dent déformé (32'), puis on fusionne les modèles de dent déformés et on définit la surface de support déformée comme étant au moins une partie de l'enveloppe de l'ensemble des modèles de dent déformés fusionnés.

6. Programme d'ordinateur selon la revendication précédente, dans lequel la déformation de la surface d'un modèle de dent actualisé (32) est un gonflement du modèle de dent actualisé, de préférence d'une amplitude constante, et/ou est, en un point de la surface d'un modèle de dent actualisé, déterminée en fonction de la distance entre les surfaces intérieure et extérieure de la gouttière en un point (M) de la surface intérieure (12) de la gouttière destiné à être, dans une position de service, en contact avec ledit point de la surface du modèle de dent actualisé.

7. Programme d'ordinateur selon l'une quelconque des revendications précédentes, dans lequel, à l'étape A), on prend une image de la gouttière à l'instant actualisé, dans une position de service dans laquelle elle est portée par ladite arcade de support, ou « image de gouttière » (36), on détermine un contour de la surface extérieure de la gouttière, ou « contour extérieur de gouttière » (24), représenté sur l'image de gouttière, et on recherche des conditions d'observation « cadrées » offrant une vue « cadrée » du modèle de référence actualisé présentant une concordance maximale avec les représentations des dents sur l'image de gouttière (36), et dans lequel, à l'étape C), on compare le contour extérieur de gouttière avec un contour de la surface de support déformée, ou « contour de support déformé » (30'), représenté sur une vue du modèle de référence actualisé déformé observé dans les conditions d'observation cadrées.

8. Programme d'ordinateur selon l'une quelconque des revendications précédentes, dans lequel on crée un modèle de référence initial à un instant initial préalable à l'instant actualisé, puis on découpe le modèle de référence initial de manière à définir, pour chaque dent représentée dans le modèle de référence initial, un modèle de référence tridimensionnel numérique de ladite dent, ou « modèle de dent initial », puis on déplace les modèles de dent initiaux (32) pour réaliser le modèle de référence actualisé à l'étape A).

9. Programme d'ordinateur selon la revendication précédente, dans lequel on déplace les modèles de dent initiaux jusqu'à obtenir un modèle de référence actualisé compatible avec au moins une image actualisée de l'arcade de support, l'image actualisée étant acquise moins d'un mois avant l'instant actualisé, l'image actualisée pouvant représenter ou non la gouttière.

10. Programme d'ordinateur selon l'une quelconque des revendications 8 et 9, et selon la revendication 7, dans lequel l'intervalle temporel entre l'instant actualisé et l'instant initial est supérieur à 1 semaine, et/ou l'intervalle temporel entre l'instant initial et le début d'un traitement orthodontique du patient avec des gouttières est inférieur à 1 mois ou à une semaine, l'instant actualisé étant pendant ledit traitement orthodontique.

11. Programme d'ordinateur selon l'une quelconque des revendications 9 et 10, dans lequel à l'étape C), avant de comparer le contour extérieur de gouttière et le contour de support déformé (30'), on superpose en registre la représentation d'un élément sur l'image actualisée et la représentation dudit élément sur l'image de gouttière, l'élément étant un élément non modifié par le port de la gouttière, de préférence un contour de gencive.

12. Programme d'ordinateur selon l'une quelconque des revendications précédentes, dans lequel, à l'étape C), on détermine le score de conformité en fonction de la différence de forme entre ladite surface extérieure et la surface de support déformée.

13. Programme d'ordinateur selon l'une quelconque des revendications précédentes, dans lequel, à l'étape C), on positionne une représentation de ladite surface extérieure (14) par rapport à la surface de support déformée de manière à superposer en registre au moins une région de ladite représentation avec ladite surface de support déformée, ladite région étant une région couvrant, dans la position de service, au moins une dent de l'arcade de support non décollée de la gouttière, puis on détermine le score de conformité en fonction de l'écartement entre la représentation de ladite surface extérieure ainsi positionnée et la surface de support déformée.

14. Programme d'ordinateur selon la revendication immédiatement précédente, dans lequel un score de conformité élémentaire est déterminé pour chacune d'au moins une partie des dents représentées, au moins partiellement, par la surface de support, de préférence pour chacune desdites dents, et le score de conformité de la gouttière à l'arcade de support est déterminé en fonction du ou des dits scores de conformité élémentaires.

15. Programme d'ordinateur selon l'une quelconque des revendications précédentes, dans lequel, à l'étape C), on détermine le score de conformité au moyen d'un réseau de neurones.

16. Système comportant un programme d'ordinateur selon l'une quelconque des revendications précédentes, comportant un téléphone mobile sur lequel est chargé le programme d'ordinateur, le téléphone mobile étant configuré pour acquérir l'image de gouttière lorsque le programme d'ordinateur est selon l'une quelconque des revendications 7 à 11 ou l'image actualisée lorsque le programme d'ordinateur est selon l'une quelconque des revendications 9 à 11.

17. Système comportant un programme d'ordinateur selon l'une quelconque des revendications 1 à 15, et un scanner tridimensionnel, le modèle de référence actualisé ou, lorsque le programme d'ordinateur est selon la revendication 8, le modèle de référence initial, étant réalisé avec le scanner.

## Patentansprüche

1. Computerprogramm, das Programmcodeanweisungen zur Umsetzung, wenn das Programm durch einen Computer ausgeführt wird, eines Verfahrens zur Bewertung, zu einem Zeitpunkt, der als "aktualisierter Zeitpunkt" bezeichnet wird, der Konformität eines orthodontischen Aligners (10) mit einem Zahnbogen eines Patienten, an dem der Aligner anliegt, als "Stützbogen" (13) bezeichnet, beinhaltet, wobei der Aligner eine Innenoberfläche (12) und eine Außenoberfläche (14) aufweist, wobei das Verfahren die folgenden aufeinanderfolgenden Schritte umfasst:
A) Erstellen eines digitalen dreidimensionalen Modells des Stützbogens in seiner Konfiguration zu dem aktualisierten Zeitpunkt bzw. eines "aktualisierten Referenzmodells" (31) und Bestimmen, in dem aktualisierten Referenzmodell, einer Stützoberfläche (33) des Aligners, wobei die Stützoberfläche eine Oberfläche des aktualisierten Referenzmodells ist, die die Oberfläche des Stützbogens, an der der Aligner in der Nutzungsposition anliegt, teilweise oder vollständig modelliert;
B) Verformen der Stützoberfläche in Abhängigkeit von der Materialdicke zwischen der Innenoberfläche (12) des Aligners und der Außenoberfläche (14) des Aligners, um eine verformte Stützoberfläche (33') zu erhalten;
C) Vergleichen einer Außenoberfläche des Aligners (14) mit der verformten Stützoberfläche, um die Abweichung zwischen der Außenoberfläche des Aligners (14) und der verformten Stützoberfläche zu bewerten, und dann Bestimmen, in Abhängigkeit von der Abweichung, mindestens eines Scores für die Konformität des Aligners mit dem Stützbogen,
wobei der Aligner eine Innenoberfläche (12) umfasst, die der Außenoberfläche (14) gegenüberliegt.

2. Computerprogramm nach dem vorhergehenden Anspruch, wobei die Verformung an jedem Punkt der Stützoberfläche (33) eine konstante Amplitude aufweist und/oder an einem Punkt der Stützoberfläche (33) in Abhängigkeit von dem Abstand zwischen der Innenoberfläche (12) und der Außenoberfläche (14) des Aligners an einem Punkt (M) der Innenoberfläche des Aligners, der dazu bestimmt ist, in einer Nutzungsposition mit dem einen Punkt der Stützoberfläche in Kontakt zu sein, bestimmt wird.

3. Computerprogramm nach einem beliebigen der vorhergehenden Ansprüche, wobei in Schritt B) die Stützoberfläche (33), vorzugsweise mindestens der Teil der Stützoberfläche, der die freien Enden (22) der Zähne des Bogens definiert, so verformt wird, dass sich die verformte Stützoberfläche (33') im Wesentlichen gemäß der Außenoberfläche der Darstellung des Aligners erstreckt, wenn dieser Aligner in dem aktualisierten Referenzmodell (31) in der Nutzungsposition ohne jegliche Ablösung des Aligners modelliert würde.

4. Computerprogramm nach einem beliebigen der vorhergehenden Ansprüche, wobei die Verformung ein Aufblähen der Stützoberfläche mit einer Amplitude ist, die im Wesentlichen gleich dem Abstand zwischen der Innenoberfläche (12) und der Außenoberfläche (14) des Aligners ist.

5. Computerprogramm nach einem beliebigen der vorhergehenden Ansprüche, wobei in Schritt A) das aktualisierte Referenzmodell zerlegt wird, um für jeden in dem aktualisierten Referenzmodell dargestellten Zahn ein digitales dreidimensionales Referenzmodell des Zahns bzw. ein "aktualisiertes Zahnmodell" (32) zu definieren, und wobei in Schritt B) die Oberfläche jedes aktualisierten Zahnmodells verformt wird, um ein verformtes Zahnmodell (32') zu erhalten, und dann die verformten Zahnmodelle fusioniert werden und die verformte Stützoberfläche als mindestens ein Teil der Hülle aller fusionierten verformten Zahnmodelle definiert wird.

6. Computerprogramm nach dem vorhergehenden Anspruch, wobei die Verformung der Oberfläche eines aktualisierten Zahnmodells (32) ein Aufblähen des aktualisierten Zahnmodells, vorzugsweise mit einer konstanten Amplitude, ist und/oder an einem Punkt der Oberfläche eines aktualisierten Zahnmodells in Abhängigkeit von dem Abstand zwischen der Innen- und Außenoberfläche des Aligners an einem Punkt (M) der Innenoberfläche (12) des Aligners, der dazu bestimmt ist, in einer Nutzungsposition mit dem Punkt der Oberfläche des aktualisierten Zahnmodells in Kontakt zu sein, bestimmt wird.

7. Computerprogramm nach einem beliebigen der vorhergehenden Ansprüche, wobei in Schritt A) ein Bild des Aligners zu dem aktualisierten Zeitpunkt in einer Nutzungsposition, in der er von dem Stützbogen getragen wird, bzw. ein "Aligner-Bild" (36) gemacht wird, eine Kontur der Außenoberfläche des Aligners bzw. eine "Aligner-Außenkontur" (24), die auf dem Aligner-Bild dargestellt ist, bestimmt wird und nach "deckungsgleichen" Betrachtungsbedingungen gesucht wird, die eine "deckungsgleiche" Ansicht des aktualisierten Referenzmodells bieten, welche eine maximale Übereinstimmung mit den Darstellungen der Zähne auf dem Aligner-Bild (36) aufweist, und wobei in Schritt C) die Aligner-Außenkontur mit einer Kontur der verformten Stützoberfläche bzw. einer "verformten Stützkontur" (30') verglichen wird, die in einer Ansicht des verformten aktualisierten Referenzmodells, das unter den deckungsgleichen Betrachtungsbedingungen betrachtet wird, dargestellt ist.

8. Computerprogramm nach einem beliebigen der vorhergehenden Ansprüche, wobei zu einem anfänglichen Zeitpunkt, der vor dem aktualisierten Zeitpunkt liegt, ein anfängliches Referenzmodell erzeugt wird, dann das anfängliche Referenzmodell zerlegt wird, um für jeden in dem anfänglichen Referenzmodell dargestellten Zahn ein digitales dreidimensionales Referenzmodell des Zahns bzw. ein "anfängliches Zahnmodell" zu definieren, und dann die anfänglichen Zahnmodelle (32) verschoben werden, um das aktualisierte Referenzmodell in Schritt A) zu erstellen.

9. Computerprogramm nach dem vorhergehenden Anspruch, wobei die anfänglichen Zahnmodelle so lange verschoben werden, bis ein aktualisiertes Referenzmodell erhalten wird, das mit mindestens einem aktualisierten Bild des Stützbogens kompatibel ist, wobei das aktualisierte Bild weniger als einen Monat vor dem aktualisierten Zeitpunkt erfasst wird, wobei das aktualisierte Bild den Aligner darstellen kann oder nicht.

10. Computerprogramm nach einem beliebigen der Ansprüche 8 und 9 und nach Anspruch 7, wobei das Zeitintervall zwischen dem aktualisierten Zeitpunkt und dem anfänglichen Zeitpunkt größer als 1 Woche ist und/oder das Zeitintervall zwischen dem anfänglichen Zeitpunkt und dem Beginn einer orthodontischen Behandlung des Patienten mit Alignern kleiner als 1 Monat oder als eine Woche ist, wobei der aktualisierte Zeitpunkt innerhalb der orthodontischen Behandlung liegt.

11. Computerprogramm nach einem beliebigen der Ansprüche 9 und 10, wobei in Schritt C) vor dem Vergleichen der Aligner-Außenkontur und der verformten Stützkontur (30') die Darstellung eines Elements in dem aktualisierten Bild und die Darstellung des Elements in dem Aligner-Bild zur Deckung gebracht werden, wobei das Element ein durch das Tragen des Aligners nicht modifiziertes Element, vorzugsweise eine Zahnfleischkontur, ist.

12. Computerprogramm nach einem beliebigen der vorhergehenden Ansprüche, wobei in Schritt C) der Konformitäts-Score in Abhängigkeit von der Formabweichung zwischen der Außenoberfläche und der verformten Stützoberfläche bestimmt wird.

13. Computerprogramm nach einem beliebigen der vorhergehenden Ansprüche, wobei in Schritt C) eine Darstellung der Außenoberfläche (14) mit Bezug auf die verformte Stützoberfläche so positioniert wird, dass mindestens ein Bereich der Darstellung mit der verformten Stützoberfläche zur Deckung gebracht wird, wobei der Bereich ein Bereich ist, der in der Nutzungsposition mindestens einen Zahn des Stützbogens abdeckt, der nicht von dem Aligner abgelöst ist, und dann der Konformitäts-Score in Abhängigkeit von dem Versatz zwischen der Darstellung der so positionierten Außenoberfläche und der verformten Stützoberfläche bestimmt wird.

14. Computerprogramm nach dem direkt vorhergehenden Anspruch, wobei für jeden von mindestens einem Teil der Zähne, die mindestens teilweise durch die Stützoberfläche dargestellt werden, vorzugsweise für jeden der Zähne, ein elementarer Konformitäts-Score bestimmt wird und der Score für die Konformität des Aligners mit dem Stützbogen in Abhängigkeit von dem oder den elementaren Konformitäts-Scores bestimmt wird.

15. Computerprogramm nach einem beliebigen der vorhergehenden Ansprüche, wobei in Schritt C) der Konformitäts-Score mit Hilfe eines neuronalen Netzwerks bestimmt wird.

16. System, das ein Computerprogramm nach einem beliebigen der vorhergehenden Ansprüche umfasst, umfassend ein Mobiltelefon, auf dem das Computerprogramm geladen ist, wobei das Mobiltelefon dazu konfiguriert ist, das Aligner-Bild zu erfassen, wenn das Computerprogramm einem beliebigen der Ansprüche 7 bis 11 entspricht, oder das aktualisierte Bild zu erfassen, wenn das Computerprogramm einem beliebigen der Ansprüche 9 bis 11 entspricht.

17. System, das ein Computerprogramm nach einem beliebigen der Ansprüche 1 bis 15 und einen dreidimensionalen Scanner umfasst, wobei das aktualisierte Referenzmodell oder, wenn das Computerprogramm Anspruch 8 entspricht, das anfängliche Referenzmodell mit dem Scanner erstellt wird.

## Claims

1. Computer program comprising program code instructions for the implementation, when the program is executed by computer, of a method for evaluation, at a time called an "updated time", of the conformity of an orthodontic aligner (10) to a dental arch of a patient on which said aligner bears, referred to as "support arch" (13), said aligner having an interior surface (12) and an exterior surface (14), said method comprising the following successive steps:
A) producing a digital three-dimensional model of the support arch, in its configuration at the updated time, or an "updated reference model" (31), and determining, in the updated reference model, a support surface (33) of the aligner, the support surface being a surface of the updated reference model that partially or completely models the surface of the support arch on which the aligner bears in the service position;
B) deforming the support surface, as a function of the thickness of material between the interior surface (12) of the aligner and the exterior surface (14) of the aligner, to obtain a deformed support surface (33');
C) comparing an exterior surface (14) of the aligner with said deformed support surface in such a manner as to evaluate the difference between the exterior surface (14) of the aligner and said deformed support surface, followed by determining, as a function of said difference, at least one score of conformity of the aligner to the support arch,
the aligner comprising an interior surface (12) opposite the exterior surface (14).

2. Computer program according to the preceding claim, in which said deformation is of constant amplitude at all points of the support surface (33) and/or is, at one point of the support surface (33), determined as a function of the distance between the interior surface (12) and exterior surface (14) of the aligner at a point (M) on the interior surface of the aligner intended, in a service position, to be in contact with said one point of the support surface.

3. Computer program according to either one of the preceding claims, in which, in step B), the support surface (33) is deformed, preferably at least the part of the support surface that defines the free ends (22) of the teeth of said arch, in such a manner that the deformed support surface (33') extends substantially along the exterior surface of the representation of the aligner if that aligner were modelled in the updated reference model (31) in the service position, in the absence of unseating of the aligner.

4. Computer program according to any one of the preceding claims, in which said deformation is a swelling of the support surface by an amplitude substantially equal to said distance between the interior surface (12) and exterior surface (14) of the aligner.

5. Computer program according to any one of the preceding claims, in which, in step A), the updated reference model is divided in such a manner as to define, for each tooth represented in the updated reference model, a digital three-dimensional reference model of said tooth, or "updated tooth model" (32), and in which, in step B), the surface of each updated tooth model is deformed to obtain a deformed tooth model (32'), after which the deformed tooth models are merged and the deformed support surface is defined as being at least a part of the envelope of the assembly consisting of the merged deformed tooth models.

6. Computer program according to the preceding claim, in which the deformation of the surface of an updated tooth model (32) is a swelling of the updated tooth model, preferably by a constant amplitude, and/or is, at one point on the surface of an updated tooth model, determined as a function of the distance between the interior and exterior surfaces of the aligner at a point (M) on the interior surface (12) of the aligner intended, in a service position, to be in contact with said point on the surface of the updated tooth model.

7. Computer program according to any one of the preceding claims, in which, in step A), an image of the aligner is taken at the updated time, in a service position in which it is carried by said support arch, or "aligner image" (36), a contour of the exterior surface of the aligner, or "aligner exterior contour" (24), represented on the aligner image, is determined, and "framed" observation conditions are sought offering a "framed" view of the updated reference model showing maximum agreement with the representations of the teeth in the aligner image (36), and in which, in step C), the aligner exterior contour is compared with a contour of the deformed support surface, or "deformed support contour" (30') represented in a view of the deformed updated reference model observed under the framed observation conditions.

8. Computer program according to any one of the preceding claims, in which an initial reference model is created at an initial time before the updated time, after which the initial reference model is divided in such a manner as to define, for each tooth represented in the initial reference model, a digital three-dimensional reference model of said tooth, or "initial tooth model", after which the initial tooth models (32) are moved in order to produce the updated reference model at step A).

9. Computer program according to the preceding claim, in which the initial tooth models are moved until there is obtained an updated reference model compatible with at least one updated image of the support arch, the updated image being acquired less than one month before the updated time, the updated image representing the aligner or not.

10. Computer program according to either one of Claims 8 and 9, and according to Claim 7, in which the time interval between the updated time and the initial time is greater than one week, and/or the time interval between the initial time and the commencement of an orthodontic treatment of the patient with aligners is less than one month or than one week, the updated time occurring during said orthodontic treatment.

11. Computer program according to either one of Claims 9 and 10, in which, in step C), before comparing the aligner exterior contour and the deformed support contour (30'), there are superimposed in register the representation of an element in the updated image and the representation of said element in the aligner image, the element being an element that is not modified by wearing the aligner, preferably a gum contour.

12. Computer program according to any one of the preceding claims, in which, in step C), the conformity score is determined as a function of the shape difference between said exterior surface and the deformed support surface.

13. Computer program according to any one of the preceding claims, in which, in step C), a representation of said exterior surface (14) is positioned relative to the deformed support surface in such a manner as to superimpose in register at least one region of said representation with said deformed support surface, said region being a region covering, in the service position, at least one tooth of the support arch not unseated from the aligner, after which the conformity score is determined as a function of the distance between the representation of said exterior surface positioned in this way and the deformed support surface.

14. Computer program according to the immediately preceding claim, in which an elementary conformity score is determined for each of at least some of the teeth represented, at least partially, by the support surface, preferably for each of said teeth, and the score of conformity of the aligner to the support arch is determined as a function of said elementary conformity score or scores.

15. Computer program according to any one of the preceding claims, in which, in step C), the conformity score is determined by means of a neural network.

16. System comprising a computer program according to any one of the preceding claims, comprising a mobile telephone on which the computer program is loaded, the mobile telephone being configured to acquire the aligner image when the computer program is according to any one of Claims 7 to 11 or the updated image when the computer program is according to any one of Claims 9 to 11.

17. System comprising a computer program according to any one of Claims 1 to 15, and a three-dimensional scanner, the scanner being used to produce the updated reference model or, when the computer program is according to Claim 8, the initial reference model.
